(19) Europäisches Patentamt
European Patent Office
Office européen des brevets

(11) EP 4 306 557 A1

(12) **EUROPEAN PATENT APPLICATION**
published in accordance with Art. 153(4) EPC

(43) Date of publication:
**17.01.2024 Bulletin 2024/03**

(21) Application number: **22766997.5**

(22) Date of filing: **03.03.2022**

(51) International Patent Classification (IPC):
***C08F 210/08*** *(2006.01)* ***C08L 23/10*** *(2006.01)*
***C08L 23/20*** *(2006.01)* ***C09J 123/10*** *(2006.01)*
***C09J 123/20*** *(2006.01)*

(52) Cooperative Patent Classification (CPC):
**C08F 210/08; C08L 23/10; C08L 23/20; C09J 123/10; C09J 123/20**

(86) International application number:
**PCT/JP2022/009197**

(87) International publication number:
**WO 2022/191039 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 JP 2021036774**

(71) Applicant: **Mitsui Chemicals, Inc.**
**Tokyo 104-0028 (JP)**

(72) Inventors:
- **ITAKURA Manabu**
  **Ichihara-shi, Chiba 299-0108 (JP)**
- **NODA Kiminori**
  **Ichihara-shi, Chiba 299-0108 (JP)**
- **EGAWA Makoto**
  **Ichihara-shi, Chiba 299-0108 (JP)**
- **KAI Yuki**
  **Ichihara-shi, Chiba 299-0108 (JP)**
- **KAMIYA Nozomi**
  **Ichihara-shi, Chiba 299-0108 (JP)**
- **HOYA Hiroshi**
  **Ichihara-shi, Chiba 299-0108 (JP)**
- **MIZUMA Takahiro**
  **Ichihara-shi, Chiba 299-0108 (JP)**

(74) Representative: **Hoffmann Eitle**
**Patent- und Rechtsanwälte PartmbB**
**Arabellastraße 30**
**81925 München (DE)**

(54) **1-BUTENE/ETHYLENE COPOLYMER, 1-BUTENE-BASED POLYMER COMPOSITION CONTAINING SAID 1-BUTENE/ETHYLENE COPOLYMER AND PROPYLENE-BASED POLYMER, 1-BUTENE-BASED POLYMER COMPOSITION CONTAINING SAID 1-BUTENE/ETHYLENE COPOLYMER, PROPYLENE-BASED POLYMER, AND ETHYLENE-BASED POLYMER, AND USES THEREOF**

(57) An object of the present invention is to develop a 1-butene/ethylene copolymer which has an excellent balance of strength and fluidity while having a low crystallization rate and low crystallinity, is excellent in compatibility with a propylene-based copolymer, and can exhibit excellent heat resistance when combined with a propylene-based resin, and the present invention relates to a 1-butene/ethylene copolymer (A) satisfying the following requirements (A1) to (A5). (A1) a content of constituent units (i) derived from 1-butene is in a range of 70 to 99.9 mol%, and a content of constituent units (ii) derived from ethylene is in a range of 0.1 to 30 mol% [provided that a total of constituent units (i) and constituent units (ii) is 100 mol%]; (A2) an isotactic pentad fraction (mmmm) calculated by $^{13}C$-NMR is in a range of 80 to 99.9%; (A3) an intrinsic viscosity [η] measured in decalin at 135°C is in a range of 0.7 to 2.0 dl/g; (A4) a melt flow rate (MFR) measured at 190°C and a load of 2.16 kg in accordance with ASTM D1238 is 1 to 100 g/10 min; and (A5) a melting peak is not observed during second temperature raising in calorimetry with a differential scanning calorimeter (DSC).

## Description

### Technical Field

The present invention relates to a 1-butene/ethylene copolymer having a specific composition and specific characteristics, a 1-butene-based polymer composition comprising the 1-butene/ethylene copolymer and a propylene-based polymer, a 1-butene-based polymer composition comprising the 1-butene/ethylene copolymer, a propylene-based polymer and an ethylene-based polymer, and uses thereof.

### Background Art

1-Butene-based polymers are excellent in, for example, creep characteristics at a high temperature, abrasion resistance, flexibility and compatibility with polypropylene, and are used for modification of, for example, pipe materials for water/hot water supply, sheets such as skin materials, polypropylene resins, and hotmelt adhesives.

Patent Literature 1 proposes a resin modifier comprising a high-fluidity 1-butene-based polymer, in which an intrinsic viscosity [η] measured at 135°C in a tetralin solvent is in a range of 0.01 to 0.5 dl/g, a melting point measured using a differential scanning calorimeter (DSC) is in a range of 0 to 100°C, and a stereoregularity index {(mmmm)/(mmrr + rmmr)} is 30 or less, as a 1-butene-based polymer having a good balance of fluidity, a tensile elastic modulus and elongation and secondary processability, and a hotmelt adhesive comprising the 1-butene-based polymer.

Patent Literature 2 proposes a hotmelt adhesive comprising a 1-butene copolymer which contains ethylene-derived units at 2 to 6 wt% and has a high melt mass flow rate (MFR) of 200 to 1500 as measured in accordance with ISO 1133 (190°C, 2.16 kg).

However, there is a problem that a 1-butene-based polymer in which stereoregularity as a 1-butene-based polymer is reduced, or a 1-butene copolymer obtained by copolymerizing 1-butene and α-olefin has low strength and heat resistance.

### Citation List

### Patent Literature

Patent Literature 1: WO03/070788
Patent Literature 2: JP2017-504667W

### Summary of Invention

### Technical Problem

An object of the present invention is to develop a 1-butene/ethylene copolymer having an excellent balance of strength and fluidity while having a low crystallization rate and low crystallinity.

### Solution to Problem

The present invention relates to a 1-butene/ethylene copolymer (A) satisfying the following requirements (A1) to (A5) :

(A1) a content of constituent units (i) derived from 1-butene is in a range of 70 to 99.9 mol%, and a content of constituent units (ii) derived from ethylene is in a range of 0.1 to 30 mol% [provided that a total of constituent units (i) and constituent units (ii) is 100 mol%];
(A2) an isotactic pentad fraction (mmmm) calculated by $^{13}$C-NMR is in a range of 80 to 99.9%;
(A3) an intrinsic viscosity [η] measured in decalin at 135°C is in a range of 0.7 to 2.0 dl/g;
(A4) a melt flow rate (MFR) measured at 190°C and a load of 2.16 kg in accordance with ASTM D1238 is 1 to 100 g/10 min; and
(A5) when, using a differential scanning calorimeter (DSC), the temperature is raised from -70°C to 200°C at a heating rate of 20°C/min (first temperature raising), maintained at 200°C for 10 minutes, then lowered to -70°C at a cooling rate of 20°C/min (first temperature lowering), maintained at -70°C for 1 minute, and then raised again from -70°C to 200°C at a heating rate of 20°C/min (second temperature raising), a melting peak is not observed during

the second temperature raising.

The present invention relates to a 1-butene-based polymer composition comprising a 1-butene/ethylene copolymer (A) satisfying the following requirements (A1) to (A5) and a propylene-based polymer (B) satisfying the following requirements (B1) and (B2):

(A1) a content of constituent units (i) derived from 1-butene is in a range of 70 to 99.9 mol%, and a content of constituent units (ii) derived from ethylene is in a range of 0.1 to 30 mol% when a total of the constituent units (i) and the constituent units (ii) is 100 mol%;
(A2) an isotactic pentad fraction (mmmm) calculated by $^{13}$C-NMR is in a range of 80 to 99.9%;
(A3) an intrinsic viscosity [η] measured in decalin at 135°C is in a range of 0.7 to 2.0 dl/g;
(A4) a melt flow rate (MFR) measured at 190°C and a load of 2.16 kg in accordance with ASTM D1238 is 1 to 100 g/10 min; and
(A5) when, using a differential scanning calorimeter (DSC), the temperature is raised from -70°C to 200°C at a heating rate of 20°C/min (first temperature raising), maintained at 200°C for 10 minutes, then lowered to -70°C at a cooling rate of 20°C/min (first temperature lowering), maintained at -70°C for 1 minute, and then raised again from -70°C to 200°C at a heating rate of 20°C/min (second temperature raising), a melting peak is not observed during the second temperature raising, and
(B1) a melting point measured by a differential scanning calorimeter is in a range of 100 to 170°C; and
(B2) an isotactic pentad fraction is in a range of 90 to 99.9%.

Further, the present invention relates to a 1-butene-based polymer composition comprising a 1-butene/ethylene copolymer (A) and a propylene-based polymer (B), and satisfying the following requirement (X4):
(X4) a Shore D hardness measured in accordance with ASTM D2240 is in a range of 20 to 80.

Advantageous Effects of Invention

A 1-butene/ethylene copolymer (A) of the present invention is excellent in balance of strength and moldability and has good softness while having a low crystallization rate and low crystallinity, and can be suitably used in, for example, modifying materials for nonwoven fabric and hotmelt adhesives.
The 1-butene/ethylene copolymer (A) has good compatibility with a propylene-based polymer (B), and therefore a 1-butene-based polymer composition of the present invention comprising the propylene-based polymer (B) can provide a butene-based polymer composition capable of forming a molded article excellent in softness and resistance to whitening during stretching. The 1-butene-based polymer composition exhibits excellent heat resistance, has good transparency, and can be suitably used for hotmelt adhesives and packaging materials.

Description of Embodiments

<1-Butene/ethylene copolymer (A)>

Each of a 1-butene/ethylene copolymer (A) and a 1-butene/ethylene copolymer (A) which is one of components of a 1-butene-based polymer composition of the present invention is a 1-butene/ethylene copolymer (A) satisfying the following requirements (A1) to (A5).
(A1) a content of constituent units (i) derived from 1-butene is in a range of 70 to 99.9 mol%, and a content of constituent units (ii) derived from ethylene is in a range of 0.1 to 30 mol% [provided that a total of constituent units (i) and constituent units (ii) is 100 mol%];
In the 1-butene/ethylene copolymer (A) of the present invention, the lower limit value of the amount of constituent units derived from 1-butene is 70 mol%. The lower limit value of the constituent units is preferably 75 mol%, more preferably 80 mol%, particularly preferably 85 mol%.
The upper limit value of the amount of constituent units derived from 1-butene is 99.9 mol%, preferably 98 mol%, more preferably 96 mol%, still more preferably 95 mol%, particularly preferably 90.5 mol%.
In the 1-butene/ethylene copolymer (A) of the present invention, the upper limit value of the amount of constituent units (ii) derived from ethylene is 30 mol%. The upper limit value of the constituent units is preferably 25 mol%, more preferably 20 mol%, particularly preferably 15 mol%.
On the other hand, the lower limit value of the amount of constituent units (ii) derived from ethylene is 0.1 mol%, preferably 2 mol%, more preferably 4 mol%, still more preferably 5 mol%, particularly preferably 9.5 mol%.
When in the 1-butene/ethylene copolymer (A), the amount of constituent units (ii) derived from ethylene is within the above-described range, it is possible to obtain good compatibility with a propylene-based polymer (B) described

later. When the constituent units derived from ethylene is equal to or lower than the upper limit value, excellent mechanical strength is obtained. For example, when the copolymer is used as a hotmelt adhesive, excellent adhesive strength is obtained, which is preferable, and when the copolymer is used as a packaging material, the durability of a film is improved, which is preferable. When the constituent units is equal to or greater than the lower limit value, an appropriate crystallization rate is obtained. For example, when the copolymer is used as a modifying material for nonwoven fabric, molding conditions enabling stable spinning broaden to improve moldability, and when the copolymer is used as a hotmelt adhesive, a characteristic of the present invention which is a long open time can be sufficiently exhibited, which is preferable. When the copolymer is used as a packaging material, excellent resistance to whitening during stretching is obtained in the case of combination with a propylene-based polymer, which is preferable.

The values of contents (mol%) of the constituent units forming the 1-butene/ethylene copolymer (A) are measured by $^{13}$C-NMR. Details of the measurement method are as described in Examples described later.

(A2) an isotactic pentad fraction (mmmm) calculated by $^{13}$C-NMR is in a range of 80 to 99.9%;

The lower limit value of an isotactic pentad fraction (mmmm) of the 1-butene/ethylene copolymer (A) of the present invention is preferably 85%, more preferably 90%. The upper limit value of the isotactic pentad fraction (mmmm) is preferably 99.5%, more preferably 99.0%. When the isotactic pentad fraction (mmmm) is in the above-described range, the copolymer can be designed to have appropriate mechanical strength and softness even if ethylene is copolymerized to control compatibility with a propylene-based copolymer (B) described later.

Details of the method for measuring the isotactic pentad fraction (mmmm) are as described in Examples described later.

(A3) an intrinsic viscosity [η] measured in decalin at 135°C is in a range of 0.7 to 2.0 dl/g;

The intrinsic viscosity [η] of the 1-butene/ethylene copolymer (A) of the present invention is more preferably 0.8 to 1.9, still more preferably 0.9 to 1.85, particularly 1.0 to 1.8. The 1-butene/ethylene copolymer (A) whose intrinsic viscosity [η] is in the above-described range is excellent in balance of fluidity and mechanical strength.

For example, an adhesive, such as a hotmelt adhesive, which contains the 1-butene/ethylene copolymer (A) has a good handling property, and is suitable for application at a high rate. A molded article excellent in mechanical properties can be easily obtained, and it is possible to secure both ease of molding and durability of a packaging material, which is preferable.

(A4) A melt flow rate (MFR) measured at 190°C and a load of 2.16 kg in accordance with ASTM D1238 is 1 to 100 g/10 min, preferably 2 to 90 g/10 min, more preferably 3 to 85 g/10 min, still more preferably 3.2 to 80 g/10 min.

When the MFR is in the above-described range, good fluidity is obtained, and the resulting molded article has good mechanical properties. For example, an adhesive, such as a hotmelt adhesive, which contains the 1-butene/ethylene copolymer (A) has a good handling property, and is suitable for application at a high rate. When the copolymer is used as a hotmelt adhesive, the MFR is particularly preferably in a range of 18 to 80 g/10 min because high fluidity is required. A molded article excellent in mechanical properties can be easily obtained. When the copolymer is used for molded articles, such as a packing material, the MFR is particularly preferably 15 g/10 min or less in consideration of balance of fluidity appropriate to a molding machine and mechanical properties.

When the MFR is equal to or greater than the lower limit value, fluidity is obtained, and an adhesive, such as a hotmelt adhesive, which contains the 1-butene/ethylene copolymer (A) has a good handling property, and is suitable for application at a high rate. When the MFR is equal to or lower than the upper limit value, the 1-butene/ethylene copolymer (A) has excellent mechanical properties, and an adhesive comprising the 1-butene/ethylene copolymer (A) is preferable from the viewpoint of adhesive strength, oil resistance and creep resistance, and when the copolymer is used as a packaging material, excellent durability is obtained, which is preferable.

(A5) A melting peak is not observed during second temperature raising in calorimetry with a differential scanning calorimeter (DSC).

In calorimetry with a differential scanning calorimeter (DSC) in the present invention, about 6 to 10 mg of a sample is precisely weighed, and hermetically enclosed in an aluminum pan, and the temperature is raised from -70°C to 200°C at a heating rate of 20°C/min (first temperature raising) to measure a DSC curve, maintained at 200°C for 10 minutes, then lowered to -70°C at a cooling rate of 20°C/min (first temperature lowering) to measure a DSC curve, maintained at -70°C for 1 minute, and then raised again from -70°C to 200°C at a heating rate of 20°C/min (second temperature raising) to measure a DSC curve.

In the present specification, the melting peak is measured by the above-described measurement method, the melting point refers to a temperature at a peak vertex of the melting peak, and the phrase "a melting peak is not observed" means that a crystal melting peak with a crystal melting enthalpy of 1 J/g or more is not observed. In the case where two or more melting peaks are observed, the lowest of the temperatures at the peak vertexes of these peaks is the melting point.

Along with the requirements (A1) to (A5), the 1-butene/ethylene copolymer (A) of the present invention has a melting point (Tm) of preferably 70°C or lower, more preferably 65°C or lower as measured during first temperature raising with the differential scanning calorimeter (DSC).

Along with the requirements (A1) to (A5), the 1-butene/ethylene copolymer (A) of the present invention has a melting enthalpy measured in first temperature raising with the differential scanning calorimeter (DSC) of preferably 1 to 60 J/g, more preferably 2 to 50 J/g. The melting enthalpy is an index of the crystallinity degree. When the melting enthalpy is equal to or lower than the upper limit value, crystallinity is low, excellent softness is obtained, flexibility and deformation followability as a hotmelt adhesive are improved. When the melting enthalpy is equal to or greater than the lower limit value, excellent mechanical properties are obtained, and adhesive strength as a hotmelt adhesive is improved. When the melting enthalpy is in the above-described range, balanced and excellent softness and low-stickiness are obtained.

The fact that a melting peak is observed during first temperature raising, and a melting peak is not observed during second temperature raising although the 1-butene/ethylene copolymer has crystallinity shows that the crystallization rate of the copolymer is extremely low. Thus, use of the 1-butene/ethylene copolymer (A) as a modifying material for nonwoven fabric is preferable because molding conditions enabling the nonwoven fabric to be stably spun broaden, leading to improvement of moldability. When the copolymer is used as an adhesive, excellent adhesive strength is obtained after solidification, and the open time during application can be increased.

Along with the requirements (A1) to (A5), the 1-butene/ethylene copolymer (A) of the present invention preferably has a weight-average molecular weight (Mw) of 100,000 to 400,000 (A6).

In the case where fluidity is required, the weight-average molecular weight is more preferably 100,000 to 400,000, still more preferably 100,000 to 390,000, particularly preferably 100,000 to 380,000. When the weight-average molecular weight is in the above-described range, an adhesive, such as a hotmelt adhesive, which contains the 1-butene/ethylene copolymer (A) has a good handling property, and is suitable for application at a high rate. In the case where mechanical strength is required, the weight-average molecular weight (Mw) is more preferably 110,000 to 380,000, still more preferably 120,000 to 380,000, particularly preferably 132,000 to 380,000. When the weight-average molecular weight is in the above-described range, a molded article excellent in mechanical properties can be easily obtained. When the copolymer is used as a hotmelt adhesive, adhesive strength is improved.

Further, the molecular weight distribution (Mw/Mn) is preferably 1.5 to 3.0, more preferably 1.6 to 2.8. Mw/Mn is a value in terms of polystyrene, which is measured by a GPC method. The 1-butene/ethylene copolymer (A) in which Mw/Mn is in the above-described range is preferable because the amount of low-molecular-weight components that deteriorate mechanical strength is small and the amount of high-molecular-weight components that impair fluidity is small.

Along with the requirements (A1) to (A5), in the 1-butene/ethylene copolymer (A) of the present invention, it is preferable that the maximum value of the Shore A hardness (conforming to ASTM D2244) is 70 to 99 (requirement (A7)), or the maximum value of the Shore D hardness (conforming to ASTM D2244) is 20 to 70 (requirement (A8)). The Shore A hardness is more preferably in a range of 75 to 98. The Shore D hardness is more preferably in a range of 25 to 65. The Shore A hardness or the Shore D hardness is an index of the crystallinity degree. When the Shore A hardness or the Shore D hardness is equal to or lower than the upper limit value, crystallinity is low, and a molded article excellent in softness and resistance to whitening during stretching can be easily obtained. When the copolymer is used as a hotmelt adhesive, flexibility and deformation followability are improved. When the Shore A hardness or the Shore D hardness is equal to or greater than the lower limit value, a molded article excellent in mechanical properties can be easily obtained. When the copolymer is used as a hotmelt adhesive, adhesive strength is improved.

<Method for producing 1-butene/ethylene copolymer (A)>

For the 1-butene/ethylene copolymer (A) of the present invention, examples of the method for obtaining the 1-butene/ethylene copolymer (A) according to the present invention include polymerization of a monomer in the presence of a catalyst such as Ziegler-Natta catalyst or a metallocene-based catalyst by a known polymerization method such as a gas phase method, a bulk method or a slurry method. In particular, use of a metallocene catalyst that can uniformly control a reaction is preferable from the viewpoint that not only the polymerized product has a narrow molecular weight distribution and a composition distribution, and it is possible to design a molded article excellent in balance of mechanical strength and softness, but also good compatibility can be obtained particularly in the case of combination with a propylene-based polymer (B) described later, and the crystallization rate can be lowered in a hotmelt adhesive, and it is particularly preferable to perform polymerization using a metallocene compound represented by the following general formula (1) or (2):

[Formula 1]

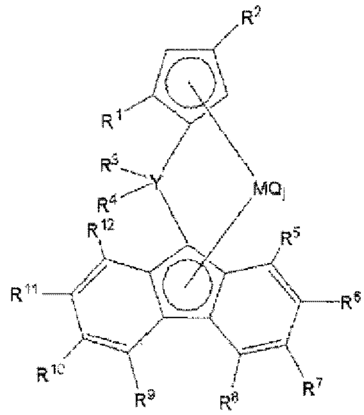

...(1)

[Formula 2]

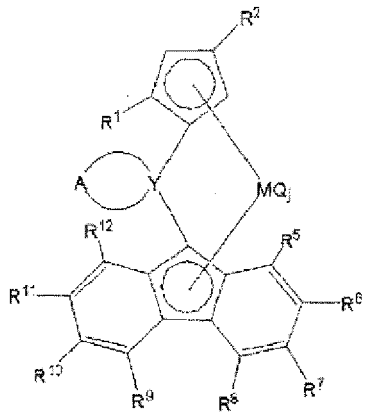

...(2)

In the general formula (1) or (2), $R^1$, $R^2$, $R^3$, $R^4$, $R^5$, $R^6$, $R^7$, $R^8$, $R^9$, $R^{10}$, $R^{11}$ and $R^{12}$ are each selected from hydrogen, a hydrocarbon group and a silicon-containing hydrocarbon group, and may be the same or different.

The hydrocarbon group is preferably an alkyl group having 1 to 20 carbon atoms, an arylalkyl group having 7 to 20 carbon atoms, an aryl group having 6 to 20 carbon atoms, or an alkylaryl group having 7 to 20 carbon atoms, and may contain one or more cyclic structures. Specific examples thereof include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl and tert-butyl.

The silicon-containing hydrocarbon group is preferably an alkylsilyl group or arylsilyl group having 1 to 4 silicon atoms and 3 to 20 carbon atoms, and specific examples thereof include trimethylsilyl, tert-butyldimethylsilyl and triphenylsilyl.

$R^2$ is preferably a sterical hydrocarbon group or silicon-containing hydrocarbon group, that is, a secondary or tertiary substituent, more preferably a substituent having 4 or more carbon atoms. Specific examples of the hydrocarbon group include isopropyl, 1,1-dimethylpropyl, 1,1-diethylpropyl, 1-ethyl-1-methylpropyl, 1,1,2,2-tetramethylpropyl, sec-butyl, tert-butyl and 1,1-dimethylbutyl. tert-butyl is particularly preferable. Examples of the silicon-containing hydrocarbon group include compounds having a structure in which part or all of carbon atoms in the compound are substituted with silicon.

The adjacent substituents $R^5$ to $R^{12}$ on the fluorene ring may be bonded to each other to form a ring. Examples of such a substituted fluorenyl group include benzofluorenyl and dibenzofluorenyl. It is preferable that the substituents $R^5$ to $R^{12}$ on the fluorene ring be left-right symmetric, that is, $R^5 = R^{12}$, $R^6 = R^{11}$, $R^7 = R^{10}$, and $R^8 = R^9$, for ease of synthesis, and more preferably, unsubstituted fluorene, 3,6-disubstituted fluorene, 2,7-disubstituted fluorene or 2,3,6,7-tetrasubstituted fluorene. Here, position 3, position 6, position 2 and position 7 on the fluorene ring correspond to $R^7$, $R^{10}$, $R^6$ and $R^{11}$, respectively. $R^3$ and $R^4$ in the general formula (1) are each selected from hydrogen and a hydrocarbon group, and may be the same or different. Specific examples of the preferred hydrocarbon group include those that are the same as described above. Y is carbon or silicon. In the case of general formula (1), $R^{13}$ and $R^{14}$ are bonded to Y

and constitute a substituted methylene group or a substituted silylene group as a bridged part. Preferred specific examples thereof include methylene, dimethylmethylene, diisopropylmethylene, methyl tert-butylmethylene, dicyclohexylmethylene, methylcyclohexylmethylene, methylphenylmethylene, diphenylmethylene, dimethylsilylene and diisopropylsilylene. Y is more preferably carbon.

When $R^2$ in the general formula (1) or (2) is a tert-butyl group, $R^1$ is preferably a methyl or ethyl group, preferably a methyl group. Each of $R^3$ and $R^4$ in the general formula (1) here is a methyl or phenyl group, preferably a methyl group. $R^3$ and $R^4$ are preferably the same. Further, when $R^2$ in the general formula (1) is a tert-butyl group, and $R^1$ is a methyl group, each of $R^5$ to $R^{12}$ may be hydrogen.

Further, a compound is suitably used in which when $R^2$ in the general formula (1) is a tert-butyl group, and $R^1$ is an ethyl group, each of $R^5$, $R^7$, $R^8$, $R^9$, $R^{10}$ and $R^{12}$ is hydrogen, and each of $R^6$ and $R^{11}$ is a tert-butyl group.

In the case of general formula (2), Y is bonded to a divalent hydrocarbon group A having 2 to 20 carbon atoms, part of which may contain an unsaturated bond and/or an aromatic ring, to form, for example, a cycloalkylidene group or a cyclomethylenesilylene group. Preferred specific examples thereof include cyclopropylidene, cyclobutylidene, cyclopentylidene and cyclohexylidene.

M in the general formulae (1) and (2) is a metal selected from Group 4 of the periodic table, and examples of M include titanium, zirconium and hafnium. Q is selected as a combination of the same or different members of a halogen, a hydrocarbon group having 1 to 20 carbon atoms, an anion ligand, and a neutral ligand capable of coordinating to a lone electron pair. Specific examples of the halogen include fluorine, chlorine, bromine and iodine, and specific examples of the hydrocarbon group include those that are the same as described above. Specific examples of the anion ligand include alkoxy groups such as methoxy, tert-butoxy and phenoxy, carboxylate groups such as acetate and benzoate, and sulfonate groups such as mesylate and tosylate. Specific examples of the neutral ligand capable of coordinating to a lone electron pair can include phosphororganic compounds such as trimethylphosphine, triethylphosphine, triphenylphosphine and diphenylmethylphosphine, and ethers such as tetrahydrofuran, diethyl ether, dioxane and 1,2-dimethoxyethane. Among them, Q may be a combination of the same or different members, and it is preferable that at least one member be a halogen or an alkyl group.

A component (C) comprises at least one compound (C-3) selected from an organoaluminum oxy compound (C-1), a compound (C-2) that reacts with the metallocene compound (A) to form an ion pair, and an organoaluminum compound. Further, if necessary, the component (C) comprises a particulate carrier (D).

As the organoaluminum oxy compound (C-1) used, a heretofore known aluminoxane can be used as it is.

Examples of the compound (C-2) that reacts with the metallocene compound (A) to form an ion pair (hereinafter, sometimes abbreviated as "ionic compound") include Lewis acids, ionic compounds, borane compounds and carborane compounds described in, for example, JPH1-501950A and JP2004-51676. Further, examples include heteropoly compounds and isopoly compounds.

Specific examples thereof include triphenylboron, tris(o-tryl)boron, tris(p-tryl)boron, tris(3,5-dimethylphenyl)boron, trimethylboron and triisobutylboron; compounds having a halogen-containing aryl group, such as compounds having a fluorine-containing aryl group, such as tris(4-fluorophenyl)boron, tris(3,5-difluorophenyl)boron, tris(4-fluoromethylphenyl)boron and tris(pentafluorophenyl)boron; and trifluoroboron.

Examples of the organoaluminum compound (C-3) that forms a polymerization catalyst for olefin include organoaluminum compounds represented by the following general formula (3):

RainAl (ORb) HpQq · · · (3)

wherein Ra and Rb may be the same as or different from each other, and each represent a hydrocarbon group having 1 to 15, preferably 1 to 4 carbon atoms, Q represents a halogen atom, m is a number of $0 < m \leq 3$, n is a number of $0 \leq n < 3$, p is a number of $0 \leq p < 3$, q is a number of $0 \leq q < 3$, and $m + n + p + q = 3$ is satisfied. Specific examples of such a compound include trimethyl aluminum, triethyl aluminum, tri-n-butyl aluminum, dialkyl aluminum hydrides such as diisopropyl aluminum hydride and diisobutyl aluminum hydride, and alkyl aluminum alkoxides such as isobutyl aluminum methoxide and isobutyl aluminum ethoxide.

The organoaluminum compound (C-3) is preferably a tri-n-alkyl aluminum such as trimethyl aluminum, triethyl aluminum or trioctyl aluminum, or a branched trialkyl aluminum such as triisobutyl aluminum, and in particular, trimethyl aluminum and triisobutyl aluminum are preferably used.

In the present invention, polymerization of the 1-butene/ethylene copolymer (A) can be performed by any of liquid-phase polymerization methods such as solution polymerization and suspension polymerization or gas-phase polymerization methods. In the liquid-phase polymerization method, an inert hydrocarbon solvent may be used, and specific examples of thereof include aliphatic hydrocarbons such as propane, butane, pentane, hexane, heptane, octane and decane; alicyclic hydrocarbons such as cyclopentane, cyclohexane and methylcyclopentane; and aromatic hydrocarbons such as benzene, toluene and xylene; or mixtures thereof. Mass polymerization can also be performed in which an olefin itself, including 1-butene, is used as a solvent.

For performing polymerization, the component (A) is used in an amount of typically $10^{-8}$ to $10^{-2}$ mol, preferably $10^{-7}$ to $10^{-3}$ mol, per liter of reaction volume, in terms of a Group 4 metal atom in the periodic table. The component (C-1) is used in an amount such that the molar ratio [(C-1)/M] of the component (C-1) to a transition metal atom (M) in the component (A) is typically 0.01 to 5000, preferably 0.05 to 2000. The component (C-2) is used in an amount such that the molar ratio [(C-2)/M] of the component (C-2) to a transition metal atom (M) in the component (A) is typically 1 to 10, preferably 1 to 5. The component (C-3) is used in an amount such that the molar ratio [(C-2)/M] of the component (C-3) to a transition metal atom (M) in the component (A) is typically 10 to 5000, preferably 20 to 2000.

The polymerization temperature is in a range of typically -50 to 200°C, preferably 0 to 100°C, more preferably 20 to 100°C. An excessively low polymerization temperature tends to be industrially disadvantageous from the viewpoint of polymerization activity per unit catalyst and heat recovery efficiency.

The polymerization pressure is under conditions of typically ordinary pressure to a gauge pressure of 10 MPa, preferably ordinary pressure to a gauge pressure of 5 MPa, and the polymerization reaction can be carried out by any of batchwise, half-continuous and continuous methods. Moreover, polymerization can be performed at two or more divided stages different in reaction conditions.

Hydrogen can be added for the purpose of controlling the molecular weight of the 1-butene/ethylene copolymer produced in polymerization or the polymerization activity, and the amount thereof is about 0.001 to 100 NL per kg of the 1-butene/ethylene copolymer (A).

<Propylene-based polymer (B)>

A propylene-based polymer (B) which is one of the components of the 1-butene-based polymer composition of the present invention is a propylene-based polymer (B) satisfying the following requirements (B1) and (B2).

(B1) A melting point measured by a differential scanning calorimeter is 100 to 170°C, preferably in a range of 130 to 170°C.

A 1-butene-based polymer composition comprising the propylene-based polymer (B) whose melting point satisfies the above-described range exhibits excellent heat resistance, and has good transparency and a moderately low crystallization rate.

(B2) An isotactic pentad fraction (mmmm) is in a range of 80 to 99.9%, preferably 85 to 99.9%, more preferably 90 to 99.9%.

A 1-butene-based polymer composition comprising the propylene-based polymer (B) whose isotactic pentad fraction (mmmm) satisfies the above-described range has a moderately low crystallization rate, and is preferable from the viewpoint of the open time as a hotmelt adhesive.

It is preferable that the propylene-based polymer (B) according to the present invention satisfying the following requirement (B3) along with the requirements (B1) and (B2).

(B3) A crystallization temperature is in a range of 40°C to 120°C, preferably 60 to 120°C, more preferably 80 to 120°C.

When the crystallization temperature of the propylene-based polymer (B) according to the present invention is equal to or lower than the upper limit value, the 1-butene copolymer composition does not have an excessively high crystallinity degree, and has an appropriate crystallization rate, and therefore when the propylene-based polymer is used as a hotmelt adhesive, it is possible to attain a long open time that is a purpose of the present invention, which is preferable. When the crystallization temperature of the propylene-based polymer (B) is equal to or greater than the lower limit value, the crystallinity degree is not excessively low, which is preferable from the viewpoint of mechanical strength and heat resistance.

For the crystallization temperature of the propylene-based polymer (B) according to the present invention, a peak observed in a first temperature lowering process with a differential scanning calorimeter is taken as a crystallization temperature.

Along with the requirements (B1) to (B3), a melt flow rate (MFR) of the propylene-based polymer (B) according to the present invention is preferably in a range of 0.1 to 150 g/10 min as measured at a temperature of 230°C and a load of 2.16 kg. The MFR is in a range of more preferably 1 to 100 g/10 min, still more preferably 2 to 100 g/10 min, particularly preferably 3 to 50 g/10 min.

When the MFR is equal to or greater than the lower limit value, fluidity is obtained, and compatibility with other polymers including the 1-butene/ethylene copolymer (A) is improved. An adhesive, such as a hotmelt adhesive, which contains the propylene-based polymer (B) has a good handling property, and is suitable for application at a high rate. When the MFR is equal to or lower than the upper limit value, the propylene-based polymer (B) is excellent in mechanical properties, and a molded article containing the propylene-based polymer (B) is excellent in mechanical strength and impact resistance, which is preferable from the viewpoint of adhesive strength, heat resistance and creep resistance when the polymer is used as, for example, an adhesive.

Examples of the propylene-based polymer (B) according to the present invention include propylene homopolymers, and copolymers of propylene and at least one $\alpha$-olefin having 2 to 20 carbon atoms, other than propylene. Here, examples of the $\alpha$-olefin having 2 to 20 carbon atoms, other than propylene, include, ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene, and ethylene or an α-olefin having 4 to 10 carbon atoms is preferable.

The copolymer of propylene and any of these α-olefins may be a random copolymer or a block copolymer. Constituent units derived from any of these α-olefins may be contained in a proportion of 35 mol% or less, preferably 30 mol% or less, in the copolymer of the α-olefin and propylene.

The method for producing the propylene-based polymer (B) according to the present invention is not particularly limited, and examples thereof include well known methods using a well known catalyst such as a Ziegler-Natta catalyst or a metallocene-based catalyst.

<Ethylene-based polymer (C)>

The 1-butene-based polymer composition of the present invention may further comprise an ethylene-based polymer (C). The ethylene-based polymer (C) contains constituent units derived from ethylene at 60 to 100 mol%. Specific examples of the ethylene-based polymer (C) according to the present invention include a high-pressure low-density polyethylene (C1) and an ethylene/α-olefin copolymer (C2).

When the ethylene-based polymer (C) is used, a molded article having, in particular, balanced and excellent impact resistance and transparency can be easily obtained from the resulting 1-butene-based polymer-based composition.

<<High-pressure low-density polyethylene (C1)>>

As the high-pressure low-density polyethylene (C1), known high-pressure low-density polyethylene can be used without restriction. The high-pressure low-density polyethylene is polyethylene that is obtained generally by radical polymerization of ethylene at a high temperature and high pressure, and the method for production thereof is not particularly limited. Examples thereof include radical polymerization methods in which radical polymerization is performed under the conditions of, for example, 500 to 2000 atm and 150 to 300°C, and here, examples of the polymerization initiator include organic peroxides.

The density of the high-pressure low-density polyethylene (C1) is in a range of preferably 900 to 925 $kg/m^3$, more preferably 910 to 925 $kg/m^3$ as measured in accordance with ASTM D1505.

The high-pressure low-density polyethylene (C1) has a melt flow rate (MFR) of preferably 0.1 g/10 min or more, more preferably 0.5 g/10 min or more, particularly preferably 1.0 g/10 min or more, and preferably 50 g/10 min or less, more preferably 30 g/10 min or less, particularly preferably 20 g/10 min or less as measured under the conditions of 190°C and a load of 2.16 kg in accordance with ASTM D1238.

<<Ethylene/α-olefin copolymer (C2) >>

The ethylene/α-olefin copolymer (C2) contains at least constituent units derived from ethylene and constituent units derived from an α-olefin having 3 to 20 carbon atoms.

The content of constituent units derived from ethylene in the ethylene/α-olefin copolymer (C2) is 60 to 99 mol%, preferably 65 to 99 mol%, more preferably 70 to 99 mol%, particularly preferably 80 to 99 mol%.

The ethylene/α-olefin copolymer (C2) is characterized by having a smaller number of long-chain branched structures as compared to the high-pressure low-density polyethylene (C1), and sometimes typically referred to as linear low-density polyethylene (LLDPE).

The content of constituent units derived from an α-olefin having 3 to 20 carbon atoms in the ethylene/α-olefin copolymer (C2) is 1 to 40 mol%, preferably 1 to 35 mol%, more preferably 1 to 30 mol%, particularly preferably 1 to 20 mol%.

Such a content is an amount per 100 mol% in total of constituent units derived from ethylene and an α-olefin having 3 to 20 carbon atoms.

When the content of constituent units is in the above-described range, a molded article having balanced and excellent impact resistance and softness can be easily obtained.

Examples of the α-olefin having 3 to 20 carbon atoms include propylene, 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene and 1-eicosene. Among them, α-olefins having 3 to 10 carbon atoms are preferable, α-olefins having 3 to 8 carbon atoms are more preferable, propylene, 1-butene and 1-octene are still more preferable, and propylene is particularly preferable.

The α-olefin having 3 to 20 carbon atoms may be used alone or in combinations of two or more thereof.

The ethylene/α-olefin copolymer (C2) may contain, in addition to the above-described constituent units, one or more kinds of constituent units derived from other polymerizable monomers as long as the purpose of the present invention is not hindered.

Examples of such other polymerizable monomers include vinyl compounds such as styrene, vinylcyclopentene, vinylcyclohexane and vinylnorbornane; vinyl esters such as vinyl acetate; unsaturated organic acids such as maleic anhydride or derivatives thereof; and nonconjugated polyenes such as dicyclopentadiene, cyclohexadiene and 5-ethylidene-2-norbornene.

Specific examples of the ethylene/α-olefin copolymer (C2) include ethylene/propylene copolymers, ethylene/1-butene copolymers, ethylene/propylene/1-butene copolymers, ethylene/propylene/ethylidenenorbornene copolymers, ethylene/1-butene/1-octene copolymers, ethylene/4-methyl-1-pentene copolymers, ethylene/1-hexene copolymers and ethylene/1-octene copolymers. Among them, for example, ethylene/propylene copolymers and ethylene/1-butene copolymers are preferable.

The density of the ethylene/α-olefin copolymer (C2) is preferably 840 $kg/m^3$ or more, more preferably 850 $kg/m^3$ or more, particularly preferably 855 $kg/m^3$ or more, and preferably 940 $kg/m^3$ or less, more preferably 899 $kg/m^3$ or less, still more preferably 890 $kg/m^3$ or less, particularly preferably 885 $kg/m^3$ or less.

When the density is in the above-described range, a molded article having balanced and excellent impact resistance, rigidity and transparency can be easily obtained.

The density can be measured by a density-gradient tube method.

The MFR of the ethylene/α-olefin copolymer (C2) (measured at 190°C and a load of 2.16 kg in accordance with ASTM D1238) is preferably 0.01 g/10 min or more, more preferably 0.1 g/10 min or more, and preferably 40 g/10 min or less, more preferably 20 g/10 min or less, particularly preferably 10 g/10 min or less.

When the MFR is in the above-described range, a molded article having balanced and excellent impact resistance, rigidity and transparency can be easily obtained.

In the ethylene/α-olefin copolymer (C2), the ratio between $MFR_{10}$ measured under the conditions of 190°C and a load of 10 kg and $MFR_2$ measured under the conditions of 190°C and a load of 2.16 kg in accordance with ASTM D1238 ($MFR_{10}/MFR_2$) is preferably 4.0 or more, more preferably 5.0 or more, and preferably 8.0 or less, more preferably 7.0 or less.

When $MFR_{10}/MFR_2$ is in the above-described range, a molded article having balanced and excellent transparency and impact resistance can be easily obtained.

The ethylene/α-olefin copolymer (C2) can be produced by a heretofore known method using, for example, a vanadium-based catalyst, a titanium-based catalyst or a metallocene-based catalyst. Preferably, production using a metallocene-based catalyst is more suitable from the viewpoint of mechanical properties, transparency and impact resistance because it is possible to obtain a copolymer having a narrow molecular weight distribution and composition distribution.

<1-Butene-based polymer composition>

A 1-butene-based polymer composition of the present invention is a composition comprising the 1-butene/ethylene copolymer (A), the propylene-based polymer (B), and further, the ethylene-based polymer (C) if necessary. Examples of the 1-butene-based composition include a composition comprising the 1-butene/ethylene copolymer (A) and the propylene-based polymer (B), a composition comprising the 1-butene/ethylene copolymer (A), the propylene-based polymer (B) and the high-pressure low-density polyethylene (C1), a composition comprising the 1-butene/ethylene copolymer (A), the propylene-based polymer (B) and the ethylene/α-olefin copolymer (C2), and a composition comprising the 1-butene/ethylene copolymer (A), the propylene-based polymer (B), the high-pressure low-density polyethylene (C1) and the ethylene/α-olefin copolymer (C2).

The 1-butene-based polymer composition of the present invention is preferably a 1-butene-based polymer composition satisfying the following requirement (X4). Further, it is more preferable to satisfy one or more of the following requirements (X1), (X2) and (X3).

[Requirement (X1)]

A preferred aspect of the present invention includes:

(X1-1) a 1-butene-based polymer composition in which the content of the 1-butene/ethylene copolymer (A) is in a range of 63 to 99 mass%, and the content of the propylene-based polymer (B) is in a range of 1 to 37 mass% [provided that a total of the 1-butene/ethylene copolymer (A) and the propylene-based polymer (B) is 100 mass%];
(X1-2) a 1-butene-based polymer composition in which the content of the 1-butene/ethylene copolymer (A) is in a range of 1 to 62 mass%, and the content of the propylene-based polymer (B) is in a range of 38 to 99 mass% [provided that a total of the 1-butene/ethylene copolymer (A) and the propylene-based polymer (B) is 100 mass%]; and
(X1-3) a 1-butene-based polymer composition in which the content of the 1-butene/ethylene copolymer (A) is in a range of 1 to 50 mass%, the content of the propylene-based polymer (B) is in a range of 30 to 98 mass%, and the

content of the ethylene-based polymer (C) is in a range of 1 to 20 mass% [provided that a total of the 1-butene/ethylene copolymer (A), the propylene-based polymer (B) and the ethylene-based polymer (C) is 100 mass%].

[Requirement (X1-1)]

It is preferable that the content of the 1-butene/ethylene copolymer (A) be in a range of 63 to 99 mass% and the content of the propylene-based polymer (B) be in a range of 1 to 37 mass% [provided that a total of the 1-butene/ethylene copolymer (A) and the propylene-based polymer (B) is 100 mass%], moreover, it is more preferable that the content of the 1-butene/ethylene copolymer (A) be in a range of 63 to 97 mass% and the content of the propylene-based polymer (B) be in a range of 3 to 37 mass%, it is still more preferable that the content of the 1-butene/ethylene copolymer (A) be in a range of 65 to 95 mass% and the content of the propylene-based polymer (B) be in a range of 5 to 35 mass%, and it is particularly preferable that the content of the 1-butene/ethylene copolymer (A) be in a range of 71 to 95 mass% and the content of the propylene-based polymer (B) be in a range of 5 to 29 mass%.

A 1-butene-based polymer composition comprising the 1-butene/ethylene copolymer (A) and the propylene-based polymer (B) within the above-described range has good compatibility between the 1-butene/ethylene copolymer (A) and the propylene-based polymer (B), has heat resistance, and is acceleratingly crystallized. Since the 1-butene/ethylene copolymer (A) is present as a main component, and crystallization is accelerated by the propylene-based polymer (B) while there remains a characteristic of the 1-butene/ethylene copolymer (A), that is, a low crystallization rate, the cutting property during pelletization is improved, and handling as pellets is facilitated.

For example, when the content of the 1-butene/ethylene copolymer (A) in the 1-butene-based polymer composition (X) is equal to or greater than the lower limit value in a hotmelt adhesive, excellent softness is obtained, excellent flexibility and surface followability are obtained, and the open time increases. When the content of the 1-butene/ethylene copolymer (A) is equal to or lower than the upper limit value, the composition has excellent mechanical strength and heat resistance, the adhesive strength of the resulting adhesive and creep resistance at a high temperature are improved.

For example, the fact that the 1-butene-based polymerization composition (X) can be handled as pellets also contributes to availability as a modifier for various molded articles in commonly used molding machines. When the composition is used as a modifier, excellent modifying effects on, for example, softness and resistance to whitening during stretching are obtained when the content of the 1-butene/ethylene copolymer (A) in the 1-butene-based polymer composition (X) is equal to or greater than the lower limit value. When the content of the 1-butene/ethylene copolymer (A) is equal to or lower than the upper limit value, pelletization is facilitated, and the mechanical strength and heat resistance of the composition are improved.

[Requirement (X1-2)]

It is preferable that the content of the 1-butene/ethylene copolymer (A) be in a range of 1 to 62 mass% and the content of the propylene-based polymer (B) be in a range of 38 to 99 mass% [provided that a total of the 1-butene/ethylene copolymer (A) and the propylene-based polymer (B) is 100 mass%], it is preferable that the content of the 1-butene/ethylene copolymer (A) be in a range of 3 to 60 mass% and the content of the propylene-based polymer (B) be in a range of 40 to 97 mass%, it is still more preferable that the content of the 1-butene/ethylene copolymer (A) be in a range of 5 to 55 mass% and the content of the propylene-based polymer (B) be in a range of 45 to 95 mass%, and it is particularly preferable that the content of the 1-butene/ethylene copolymer (A) be in a range of 5 to 50 mass% and the content of the propylene-based polymer (B) be in a range of 50 to 95 mass%.

When the content of the 1-butene/ethylene copolymer (A) in the 1-butene-based polymer composition (X) is in the above-described range in a molded article, it is possible to easily obtain a molded article which is moderately soft and excellent in impact resistance, transparency and resistance to whitening during stretching owing to the 1-butene/ethylene copolymer (A) while retaining characteristics such as mechanical strength (for example, bending resistance and strength at breakage) and heat resistance from the propylene-based polymer (B).

[Requirement (X1-3)]

In the case of a 1-butene-based composition having the three components of 1-butene/ethylene copolymer (A), propylene-based polymer (B) and ethylene-based polymer (C), it is preferable that the content of the 1-butene/ethylene copolymer (A) be in a range of 1 to 50 mass%, the content of the propylene-based polymer (B) be in a range of 30 to 98 mass%, and the content of the ethylene-based polymer (C) be in a range of 1 to 20 mass% [provided that a total of the 1-butene/ethylene copolymer (A), the propylene-based polymer (B) and the ethylene-based polymer (C) is 100 mass%], moreover, it is more preferable that the content of the 1-butene/ethylene copolymer (A) be in a range of 5 to 40 mass%, the content of the propylene-based polymer (B) be in a range of 42 to 92 mass%, and the content of the ethylene-based polymer (C) be in a range of 3 to 18 mass%, and

it is still more preferable that the content of the 1-butene/ethylene copolymer (A) be in a range of 8 to 35 mass%, the content of the propylene-based polymer (B) be in a range of 48 to 88 mass%, and the content of the ethylene-based polymer (C) be in a range of 4 to 17 mass%.

When the content of the 1-butene/ethylene copolymer (A) in the 1-butene-based polymer composition (X) is in the above-described range in a molded article, it is possible to easily obtain a molded article which is moderately soft and excellent in impact resistance and resistance to whitening during stretching owing to the 1-butene/ethylene copolymer (A) and the ethylene-based polymer (C), while retaining characteristics such as mechanical strength (for example, bending resistance and strength at breakage) and heat resistance from the propylene-based polymer (B). In particular, the ethylene-based polymer (C), which has a glass transition temperature lower than that of the propylene-based polymer (B), can improve impact resistance at a low temperature, and also contributes to improvement of moldability.

[Requirement (X2)]

In measurement using a differential scanning calorimeter (DSC), the temperature is raised from -70°C to 200°C at a heating rate of 20°C/min (first temperature raising), maintained at 200°C for 10 minutes, then lowered to -70°C at a cooling rate of 20°C/min (first temperature lowering), maintained at -70°C for 1 minute, and then raised again from -70°C to 200°C at a heating rate of 20°C/min (second temperature raising). A peak (crystallization temperature) on the high-temperature side generated in the first temperature lowering is in a range of 40°C or higher and lower than 110°C, a first peak (melting peak) generated in the second temperature raising is 20°C or higher and lower than 100°C, and a second peak (melting peak) generated in the second temperature raising is in a range of 100°C to 170°C.

It is preferable that the melting peak of the 1-butene-based polymer composition of the present invention have at least a first peak and a second peak in a DSC curve measured in second temperature raising with the differential scanning calorimeter (DSC).

Here, the first peak is a peak in a range below 100°C in a DSC curve. The upper limit value of the first peak is preferably lower than 100°C, more preferably 80°C or lower, still more preferably 70°C or lower. On the other hand, the lower limit value of the first peak is preferably 20°C or higher, more preferably 25°C or higher, still more preferably 30°C or higher.

The first peak is a melting peak derived from the 1-butene/ethylene copolymer (A). There may be two or more first peaks. In other words, there may be two or more melting peaks in a range below 100°C.

The second peak is a peak in a range of 100°C or higher. The upper limit value of the second peak is preferably 170°C or lower, more preferably 168°C or lower, still more preferably 165°C or lower. On the other hand, the lower limit value of the second peak is 100°C or higher, more preferably 105°C or higher, still more preferably 110°C or higher.

The second peak is a melting peak derived from the propylene-based polymer (B). There may be two or more second peaks. In other words, there may be two or more melting peaks in a range of 100°C or higher.

For the 1-butene-based polymer composition of the present invention, the reason why a melting peak derived from a 1-butene polymer, which is not observed in the 1-butene/ethylene copolymer (A) of the present invention, is observed in the 1-butene-based polymer composition of the present invention is not necessarily clear, and may be that good compatibility with the propylene-based polymer (B) contained in the ethylene-1-butene-based polymer composition is obtained by appropriately controlling constituent units derived from ethylene in the 1-butene/ethylene copolymer (A), and the presence of a small amount of the propylene-based polymer (B) accelerates crystallization of the 1-butene/ethylene copolymer (A).

[Requirement (X3)]

A Shore A hardness measured in accordance with ASTM D2240 is in a range of preferably 65 to 99, more preferably 70 to 99, still more preferably 71 to 98, even more preferably 72 to 97.

[Requirement (X4)]

A Shore D hardness measured in accordance with ASTM D2240 is preferably in a range of 20 to 80.

When the Shore A hardness or Shore D hardness is equal to or lower than the upper limit value, crystallinity is low, excellent softness is obtained, flexibility and deformation followability as a hotmelt adhesive are improved. When the melting enthalpy is equal to or greater than the lower limit value, excellent mechanical properties are obtained. When the composition is used as a hotmelt adhesive, adhesive strength is improved.

In particular, when softness is required, the Shore D hardness is preferably 20 to 70, more preferably 20 to 43.

When excellent mechanical properties are required, the Shore D hardness is preferably 44 to 80, more preferably 44 to 70.

In the 1-butene-based polymer composition of the present invention, the melt flow rate (MFR) measured at

190°C and a load of 2.16 kg in accordance with ASTM D1238 is not particularly limited, and preferably is, for example, in a range of 0.1 to 100 g/10 min.

When the MFR is equal to or greater than the lower limit value, fluidity is obtained, and a hotmelt adhesive comprising the 1-butene-based polymer composition of the present invention has a good handling property, and is suitable for application at a high rate. When the MFR is equal to or lower than the upper limit value, the 1-butene-based polymer composition of the present invention is excellent in mechanical strength, and has a good pelletization property. Excellent mechanical strength results in improvement of adhesive strength as a hotmelt adhesive and improvement of durability as a packaging material. When the MFR is equal to or greater than the lower limit value, the 1-butene-based polymer composition of the present invention is excellent in fluidity, has good applicability as a hotmelt adhesive, and is easily molded into various molded articles.

In particular, when fluidity is required, the MFR is preferably 12 to 100 g/10 min, more preferably 12 to 50 g/10 min.

When excellent mechanical strength is required, the MFR is preferably 1 g/10 min or more and less than 12 g/10 min.

The 1-butene-based polymer composition of the present invention has a melting enthalpy $\Delta$Hfus at a second peak measured during second temperature raising with a differential scanning calorimeter (DSC) in a range of 5 to 100 J/g, preferably 5 to 90 J/g, more preferably 5 to 85 J/g, still more preferably 5 to 80 J/g.

The melting enthalpy is an index of the crystallinity degree. When the melting enthalpy is equal to or lower than the upper limit value, crystallinity is low, and a molded article excellent in softness can be easily obtained. When the composition is used as a hotmelt adhesive, flexibility and deformation followability are improved. When the melting enthalpy is equal to or greater than the lower limit value, a molded article excellent in mechanical properties and heat resistance can be easily obtained. When the composition is used as a hotmelt adhesive, adhesive strength and creep resistance at a high temperature are improved.

In a hotmelt adhesive, the 1-butene-based polymer composition of the present invention has a haze of 50% or less, preferably 45% or less as measured in accordance with JIS K 7136. When the haze of the 1-butene-based polymer composition is within the above-described range, the composition has good transparency, and is suitable as adhesives and packaging materials used for applications in which designability is required.

If necessary, at least one additive selected from heretofore known fluidity modifiers, crystal nucleating agents, antioxidants, heat-resistance stabilizers, weather-resistance stabilizers such as ultraviolet absorbers and light stabilizers, hydrochloric acid absorbers, pigments, dyes, antibacterial agents, antifungal agents, antistatic agents, lubricants, slipping agents, anti-blocking agents, antifogging agents, foaming agents, foaming auxiliaries, plasticizers such as mineral oil, and fillers can be added to the 1-butene-based polymer composition of the present invention as long as the purpose of the present invention is not hindered.

<Method for producing 1-butene-based polymer composition>

The method for producing the 1-butene-based polymer composition of the present invention is not particularly limited, and the 1-butene-based polymer composition can be prepared by, for example, a method in which the 1-butene/ethylene copolymer (A) and the propylene-based polymer (B), and the ethylene-based polymer (C) if necessary, and other optional components if necessary are mixed at the above-described blending ratio by, for example, a Henschel mixer, a V-blender, a ribbon blender, a tumbler blender or a kneader ruder, or melted or kneaded by, for example, a single-screw extruder, a twin-screw extruder, a kneader or a Banbury mixer after being mixed or without being mixed. Further, for example, granulation and grinding may be performed if necessary.

When these components are mixed or kneaded, the components to be blended may be added at a time or step by step.

The method for melting and kneading is not particularly limited, and it is possible to perform the melting and kneading using a melting and kneading apparatus such as an extruder which is commonly marketed. For example, the temperature of a portion kneaded by a melting and kneading apparatus is typically 120 to 250°C, preferably 120 to 230°C. The kneading time is typically 0.5 to 30 minutes, particularly preferably 0.5 to 5 minutes.

[Molded article]

Various molded articles formed from the 1-butene/ethylene copolymer (A), the 1-butene-based polymer composition comprising the 1-butene/ethylene copolymer (A) and the propylene-based polymer (B), or the 1-butene-based polymer composition comprising the 1-butene/ethylene copolymer (A), the propylene-based polymer (B) and the ethylene-based polymer (C) of the present invention can be widely used for heretofore known polyolefin applications. The molded articles are obtained by known thermoforming methods, such as extrusion molding, injection molding, inflation molding, blow molding, extrusion blow molding, injection blow molding, press molding, vacuum molding, powder slush molding, calender molding and foam molding.

[Uses]

The 1-butene/ethylene copolymer (A), the 1-butene-based polymer composition comprising the 1-butene/ethylene copolymer (A) and the propylene-based polymer (B), or the 1-butene-based polymer composition comprising the 1-butene/ethylene copolymer (A), the propylene-based polymer (B) and the ethylene-based polymer (C) of the present invention are suitably used for pellets and hotmelt adhesives, and the hotmelt adhesives can be used for automobile parts such as automobile interior parts and exterior parts. Molded articles comprising the 1-butene-based polymer composition can also be used for films, sheets, and packaging materials, nonwoven fabrics and automobile parts such as automobile interior parts and exterior parts in which such a film or a sheet are used.

[Preparation and applications of hotmelt adhesive]

The hotmelt adhesive of the present invention can be obtained by, for example, a method in which the components are melted and mixed in sequence by rotation of a stirring vane preferably under vacuum or nitrogen flow in a melting and dissolving bath such as a heating-type melting and stirring bath, a method in which the components are melted and mixed by applying shear under heating by a twin rotating vane of a kneader, or a method in which the components are melted and mixed by screw of a single-screw or twin-screw extruder. The temperature is adjusted to typically 120 to 230°C, preferably 150 to 200°C. A bale-shaped or pellet-shaped sample prepared in this way can be used for various applications.

In the case of a hotmelt adhesive, an adherent may be combined before curing of the adhesive, and it is also possible to combine the adhesive after the once cured hotmelt adhesive is heated again to be activated. Examples of the shape of such a once cured hotmelt adhesive itself include a sheet shape, a film shape, a nonwoven shape, a piece shape and a rod shape.

In the hotmelt adhesive of the present invention, the content of the 1-butene/ethylene copolymer (A) is typically 1 to 90 mass%, preferably 3 to 50 mass%, more preferably 5 to 40 mass% based on the total amount of the adhesive. It is preferable that the content be in the above-described range from the viewpoint of balance between the adhesive force and the applicability of the hotmelt adhesive.

The hotmelt adhesive of the present invention may contain an amorphous poly-alpha-olefin (hereinafter, referred to as APAO) if necessary.

The melting viscosity of APAO is preferably 500 to 200,000 mPa·s/190°C, more preferably 1,000 to 50,000 mPa·s/190°C. That is, a melting viscosity of less than 500 mPa·s/190°C reduces the adhesive strength of the adhesive decreases as sufficient cohesive force cannot be obtained. On the other hand, a melting viscosity of more than 200,000 mPa·s/190°C deteriorates workability when the hotmelt adhesive is applied.

There are various compositions of such APAO, and examples thereof include homopolymers or copolymers such as atactic polypropylene and atactic polybutene-1, copolymers or terpolymers of, for example, propylene, ethylene and butene-1, and propylene homopolymers, propylene-butene copolymers and propylene-ethylene copolymers.

The 1-butene/ethylene copolymer (A) of the present invention is suitably used because it contains a large amount of 1-butene as a constituent unit, and is excellent in compatibility with a propylene-based polymer, and hence excellent in APAO using propylene or 1-butene.

Specific examples of APAO include RT2730 (trade name) (melting viscosity at 190°C: 4,000 mPa·s) manufactured by REXtac LLC., and VESTOPLAST 704 (product name, manufactured by Evonik Industries AG, melting viscosity (190°C): 3,500 mPa·s).

APAOs may be used alone or in combinations of two or more thereof.

When APAO is used in the hotmelt adhesive of the present invention, the content of APAO is typically 1 to 99 mass%, preferably 10 to 90 mass%, more preferably 20 to 80 mass% based on the total amount of the adhesive. It is preferable that the content be in the above-described range from the viewpoint of balance between the adhesive force and the applicability of the hotmelt adhesive.

The hotmelt adhesive of the present invention may contain a tackifier if necessary.

Examples of the tackifier include at least one resin selected from natural rosin, modified rosin, polyterpene-based resins, synthetic petroleum resins, coumarone-based resins, phenol-based resins, xylene-based resins, styrene-based resins, low-molecular-weight styrene-based resins and isoprene-based resins. Among them, rosin-based resins, polyterpene-based resins and synthetic petroleum resins are preferable, and those having aliphatic and/or alicyclic structures are more preferable.

Here, examples of particularly preferred petroleum resins having an aliphatic and/or an alicyclic structure include partially and fully hydrogenated rosins and derivatives thereof as rosin-based resins, homopolymers or copolymers of cyclic terpene as polyterpene-based resins, and aliphatic petroleum resins, alicyclic petroleum resins, aliphatic-alicyclic copolymer resins or hydrogenated products of copolymers of a naphtha cracked oil with various terpenes, as synthetic petroleum resins.

The tackifier is preferably one in which the softening point is in a range of 25 to 160°C. When the softening point is 25°C or higher, bleeding to the surface can be prevented, and when the softening point is 160°C or lower, the viscosity during melting is not excessively high, and good processability is obtained. Specifically, "ARKON P-70", "ARKON P-90", "ARKON P-100", "ARKON P-115", "ARKON P-125" and "ARKON P-140" (trade names) (each manufactured by Arakawa Chemical Industries, Ltd.) are suitably used.

The tackifiers may be used alone or in combinations of two or more thereof.

When a tackifier is used in the hotmelt adhesive of the present invention, the content of the tackifier is typically 1 to 70 mass%, preferably 5 to 50 mass%, more preferably 10 to 40 mass% based on the total amount of the adhesive. It is preferable that the content be in the above-described range because fluidity and adhesive force can be imparted without reducing adhesive strength.

The hotmelt adhesive of the present invention may contain wax if necessary.

Examples of the wax include synthetic waxes such as Fischer-Tropsch wax, polyethylene wax and polypropylene wax, petroleum waxes such as paraffin wax and microcrystalline wax, natural waxes such as Japanese wax, carnauba wax and bees wax. Polypropylene wax is particularly preferable because the 1-butene/ethylene copolymer (A) of the present invention has excellent compatibility with polypropylene.

The wax has a B-type viscosity (190°C) of preferably 10 to 8000 mPa·s, more preferably 100 to 5000 mPa·s. It is preferable that the B-type viscosity be in the above-described range from the viewpoint of cohesive force and kneading processability.

The wax has a melting point of preferably 80 to 150°C, more preferably 90 to 140°C as measured by DSC. It is preferable that the melting point be in the above-described range from the viewpoint of softness and kneading processability when an adhesive is used.

Examples of the commercially available wax include "Mitsui Hi-WAX 420P" "Mitsui Hi-WAX NL100" and "Mitsui Hi-WAX NP015" (trade names) (each manufactured by Mitsui Chemicals, Inc.).

The waxes may be used alone or in combinations of two or more thereof.

When wax is used in the hotmelt adhesive of the present invention, the content of the wax is typically 1 to 60 mass%, preferably 1 to 50 mass%, more preferably 1 to 40 mass% based on the total amount of the adhesive. It is preferable that the content be in the above-described range because fluidity and heat resistance can be imparted without reducing adhesive strength.

If necessary, at least one additive selected from heretofore known fluidity modifiers, nucleating agents, antioxidants, heat-resistance stabilizers, ultraviolet absorbers, light stabilizers, pigments, dyes, antibacterial agents, antifungal agents, antistatic agents, foaming agents, foaming auxiliaries, plasticizers such as mineral oil, and fillers can be added to the hotmelt adhesive of the present invention as long as the purpose of the present invention is not hindered.

There is no particular limitation on application of the hotmelt adhesive as long as the purpose of the present invention can be achieved, and commercially available hotmelt applicators are widely used. Examples of the type of the hot melt applicator include slot coater application, roll coater application, spiral application in which application can be performed in a spiral form, omega application or control seam application in which application can be performed in a wavy form, slot spray application or curtain spray application in which application can be performed in a planar form, dot application in which application can be performed in a dotted form, and bead application in which application can be performed in a linear form. Examples of the particularly preferred object to which the hotmelt adhesive is applied include cardboards to be bonded to each other.

Examples of the method for using the hotmelt adhesive of the present invention as a hotmelt adhesive include a bonding method in which the obtained hotmelt adhesive is molded into a sheet shape, a film shape or a nonwoven fabric shape by a screw-type extruder including a die portion of so-called T-die type, inflation type, calender type or spinning type, and fixed on the middle of an adherent to be laminated and bonded, and bonding by heating is performed, or the adhesive molded into a sheet shape is heated and melted on one adherent, and the other adherent is directly compression-bonded thereto while cooling is performed. There are also a method in which the hotmelt adhesive of the present invention is melted by the screw-type extruder, the adhesive that has not been subjected to molding processing as described above is directly inserted between adherents to be laminated, and the adherents are thermally bonded, and a method in which when one adherent is a thermoplastic plastic, the adherent is directly bonded by co-extrusion, or the adhesive is directly applied to one adherent, and bonding by heating is then performed.

The hotmelt adhesive of the present invention can be suitably used for bonding base materials composed of, for example, a polyolefin resin to each other, bonding the base material to a metal material (for example, metal plate, metal foil or metal mesh) or another material (for example, nonwoven fabric, woven fabric, cloth, paper such as a cardboard, glass), and bonding the metal materials or other materials to each other, for example. In particular, the hotmelt adhesive can be suitably used for bonding a cardboard to another adherent, or a cardboard to a cardboard.

Examples of the base material composed of, for example, a polyolefin resin include single-layered or laminated resin sheets of, for example, a polyolefin resin (for example, polyethylene and polypropylene), a polyester resin, a polycarbonate resin, a polyarylate resin, an acrylic resin, a polyphenylene sulfide resin, a polystyrene resin, a vinyl resin,

a vinyl chloride resin, a polyimide resin and an epoxy resin.

[Film]

A film comprising the 1-butene/ethylene copolymer (A) of the present invention or a 1-butene-based polymer composition using the copolymer may be a stretched film or an unstretched film, and is preferably an unstretched film.
The unstretched film is not particularly limited as long as it is a film that is not stretched, and for example, the shape and the size (thickness) thereof may be appropriately selected according to a desired application. The unstretched film may be single-layered or multi-layered. When the unstretched film is multi-layered, at least one layer thereof may be a film comprising the 1-butene/ethylene copolymer (A) or the present composition. Examples of the film include those obtained by a method in which co-extrusion is performed by a known method for molding a multi-layered film, such as a T-die film molding method or an inflation film molding method, or a method in which a layer containing the 1-butene/ethylene copolymer (A) or the present composition is further laminated onto a base material molded in advance. The base material is not particularly limited, and may be a metal such as an aluminum plate, a steel plate or a stainless steel plate, or may be a thermoplastic resin. When the unstretched film is multi-layered, none of the layers thereof are stretched.
The thickness of the unstretched film (total thickness in the case of a multi-layered film) is preferably 5 um or more, more preferably 10 um or more, and preferably 150 um or less, more preferably 100 um or less.
In the present specification, a film and a sheet are not expressly discriminated from each other, and typically, the film refers to a film-shaped material having a thickness of less than 250 um, whereas the sheet refers to a thin plate-shaped material having a thickness of 250 um or more.
Examples of the specific application of the unstretched film include packaging films for packaging, for example, food, liquid and medicaments, and packaging materials obtained therefrom.

<Sheet>

The sheet is not particularly limited, and for example, the shape and the size (thickness) thereof may be appropriately selected according to a desired application. The sheet may be single-layered or multi-layered. When the sheet is multi-layered, at least one layer thereof may be a sheet comprising the 1-butene/ethylene copolymer (A) or the present composition.
The thickness of the sheet (total thickness in the case of a multi-layered sheet) is preferably 250 to 2000 um, more preferably 250 to 1500 um.
Examples of the specific application of the sheet include packaging sheets for packaging, for example, food, liquid and medicaments, and containers formed from the sheet (for example, trays and cups obtained by subjecting a sheet to thermal molding, and containers obtained by subjecting a sheet to bending processing).

Examples

Hereinafter the present invention will be described in more detail with reference to Examples, but the present invention is in no way limited to these Examples.
The polymers used in Examples and Comparative Examples are shown below.

[1-Butene/ethylene copolymer (A)]

1-Butene/ethylene copolymers (A-1) to (A-8) obtained in Production Examples described later were used.
As Comparative Example, a 1-butene/ethylene copolymer (A'-10) having physical properties shown in Table 1 was used.

[Propylene-based polymer (B)]

(B-1); Random polypropylene (manufactured by Prime Polymer Co., Ltd., trade name: Prime Polypro F327, MFR (230°C, 2.16 kg load): 7 g/10 min, melting point: 140°C, mmmm: 95.3%)
(B-2); Propylene homopolymer (manufactured by Prime Polymer Co., Ltd., trade name: Prime Polypro F107A, MFR (230°C, 2.16 kg load): 7 g/10 min, melting point: 160°C, mmmm fraction: 96%)

[Ethylene-based polymer (C)]

(C1-1); Low-density polyethylene (manufactured by DOW-MITSUI POLYCHEMICALS CO., LTD., trade name: MIRASON 11P, MFR (190°C, 2.16 kg load): 7.2 g/10 min, density: 0.917 g/$cm^3$)
(C2-1); Ethylene/propylene copolymer (MFR (190°C, 2.16 kg load): 0.6 g/10 min, density: 0.869 g/$cm^3$)

[Other components]

(PER-1); Propylene/ethylene copolymer (manufactured by Exxon Mobil Corporation, trade name: Vistamaxx 3980FL, ethylene content: 9 mol%, MFR (230°C, 2.16 kg load): 9 g/10 min)
(PER-2); Propylene/ethylene copolymer (manufactured by Exxon Mobil Corporation, trade name: Vistamaxx 3000, ethylene content: 11 mol%, MFR (230°C, 2.16 kg load): 7 g/10 min)

[Example of production of 1-butene/ethylene copolymer (A)]

[Production Example 1]

n-Hexane was supplied at a rate of 14.2 L/h to a supply port of a continuous polymerization vessel having a volume of 300 liters, and a solution of a mixture of isopropylidene(3-tert-butyl-5-methylcyclopentadienyl-fluolenyl)zirconium dichloride (main catalyst 1), modified methylaluminoxane and triisobutylaluminum in hexane (concentration of main catalyst 1 in terms of zirconium: 0.5 mmol/liter, concentration of modified methylaluminoxane in terms of aluminum: 4 mmol/L, concentration of triisobutylaluminum in terms of aluminum: 100 mmol/L) was continuously supplied at a rate of 0.22 L/h through another supply port (hexane in total: 10 L/h). At the same time, 1-butene, ethylene and hydrogen were supplied at rates of 23.5 kg/h, 0.39 kg/h and 4 NL/h, respectively, through another supply port of the polymerization vessel, and continuous solution polymerization was performed under the conditions of a polymerization temperature of 60°C, a polymerization pressure of 0.8 MPaG and a retention time of 1.5 hours to obtain a 1-butene/ethylene copolymer (A-1).

[Production Examples 2 to 8]

1-Butene/ethylene copolymers (A-2) to (A-8) were produced in the same manner as in the production method of Example 1 except that the amounts of 1-butene, ethylene and hydrogen supplied and the polymerization pressure were adjusted as shown in Table 1.

The physical properties of 1-butene/ethylene copolymers (A) and 1-butene-based polymer compositions obtained in Production Examples and Comparative Examples were measured by the following methods.

Table 1 shows the results.

[Table 1]

Table 1

| | | Production Example 1 | Production Example 2 | Production Example 3 | Production Example 4 | Production Example 5 | Production Example 6 | Production Example 7 | Production Example 8 | Comparative Example 1 |
|---|---|---|---|---|---|---|---|---|---|---|
| | | A-1 | A-2 | A-3 | A-4 | A-5 | A-6 | A-7 | A-8 | A'-10 |
| Amount of 1-butene supplied | kg/h | 23.5 | 23.5 | 23.5 | 23.5 | 27.5 | 27.7 | 27.5 | 27.5 | 19.3 |
| Amount of ethylene supplied | kg/h | 0.39 | 0.8 | 0.7 | 0.91 | 1.3 | 1.6 | 1.1 | 1.1 | 2.0 |
| Amount of hydrogen supplied | NL/h | 4.0 | 4.0 | 4.0 | 4.5 | 5.0 | 6.0 | 3.0 | 7.0 | 11.1 |
| Polymerization pressure | MPaG | 0.8 | 0.7 | 0.7 | 0.7 | 0.7 | 0.7 | 0.7 | 0.7 | 1.2 |
| Content of C2 | mol% | 6.9 | 9.1 | 11.9 | 15.4 | 17.9 | 19.0 | 14.5 | 14.6 | 10.5 |
| MFR (190°C, 2.16 kg load) | g/10 min | 29.6 | 26.8 | 22 | 22.9 | 23 | 24.4 | 3.4 | 77 | 177 |
| mmmm | % | 92.5 | n.a. | 94.6 | n.a. | n.a. | n.a. | n.a. | 98 | 98.7 |
| [η] | dl/g | 1.04 | 1.07 | 1.14 | 1.12 | 1.14 | 1.12 | 1.72 | 0.90 | 0.71 |
| Mw | - | 185,000 | n.a. | 200,000 | n.a. | n.a. | 190,000 | 360,000 | 140,000 | 120,000 |
| Mw/Mn | - | 1.96 | n.a. | 1.97 | n.a. | n.a. | 1.9 | 2.13 | 1.86 | 10.15 |
| Melting point (1st) | °C | 49 | 53 | 48 | 44 | 44 | 45 | 45 | 47 | 97 |
| Melting enthalpy (1st) | J/g | 34 | 34 | 27 | 23 | 13 | 7 | 21 | 22 | 38 |
| Melting point (2nd) | °C | n.a. | n.a. | n.a. | n.a. | n.a. | n.a. | n.a. | n.a. | 85.2 |
| Melting enthalpy (2nd) | J/g | n.a. | n.a. | n.a. | n.a. | n.a. | n.a. | n.a. | n.a. | 1.7 |

(continued)

| | | Production Example 1 | Production Example 2 | Production Example 3 | Production Example 4 | Production Example 5 | Production Example 6 | Production Example 7 | Production Example 8 | Comparative Example 1 |
|---|---|---|---|---|---|---|---|---|---|---|
| | | A-1 | A-2 | A-3 | A-4 | A-5 | A-6 | A-7 | A-8 | A'-10 |
| Half-crystallization time t1/2 (30°C) | min | n.a. | n.a. | n.a. | n.a. | n.a. | n.a. | n.a. | n.a. | 13 |
| Yield stress | MPa | 6.2 | 5.7 | 4.1 | 2.7 | - | - | 2.5 | 2.4 | 6.5 |
| Strength at break | MPa | 33 | 30 | 24 | 18 | 8 | 2 | 23 | 15 | 18 |
| Elongation at break | % | 550 | 595 | 695 | 745 | 545 | 274 | 820 | 770 | 460 |
| Young's modulus | MPa | 180 | 105 | 100 | 70 | 40 | 20 | 60 | 60 | 175 |
| Shore A | - | 96 | 96 | 92 | 86 | 71 | 59 | 96 | 82 | 91 |
| Shore D | - | 42 | 40 | 32 | 29 | 19 | 15 | 42 | 27 | 44 |

[Contents of 1-butene and ethylene in 1-butene/ethylene copolymer (A)]

For quantification of the contents of 1-butene and ethylene, measurement was performed as follows using a nuclear magnetic resonance apparatus AVANCE cryo-500 model manufactured by Bruker BioSpin K.K. A mixed solvent of o-dichlorobenzene/deuterated benzene (volume ratio: 80/20) was used as a solvent, the sample concentration was 20 mg/0.6 mL, the measurement temperature was 120°C, observation angle was $^{13}C$ (125 MHz), the sequence was single-pulse proton broad-band decoupling, the pulse width was 4.7 μsec (45° pulse), the repetition time was 5.5 sec, the number of scans was 128, and the chemical shift reference value was 27.50 ppm in terms of a carbon signal of the methylene group on the butene side chain. From the obtained $^{13}C$-NMR spectrum, the composition of 1-butene (C4 content; mol%) and ethylene (C2 content; mol%) was quantified.

[MFR of 1-butene/ethylene copolymer (A)]

MFR was measured at 190°C and a load of 2.16 kg in accordance with ASTM D1238.

[Measurement of isotactic pentad fraction (mmmm)]

Where the chemical shift of a peak top attributed to a pentad represented by mmmm (pentad isotacticity) was 27.5 ppm, the peak area S with a peak top at 27.5 ppm and the total area S' of peaks appearing in a range from 27.3 ppm to 26.3 ppm were determined, and the pentad isotacticity (mmmm) of the 1-butene/ethylene copolymer (A) was calculated from the following equation (the detection limit was 0.01%).

$$(mmmm) = S/(S + S') \times 100\ (\%)$$

Here, major peaks appearing in a range from 27.3 ppm to 26.3 ppm were peaks attributed to mmmr (27.3 ppm), mmrr and rmmr (27.2 ppm) and mrrm (26.3 ppm) .

[Intrinsic viscosity [η] (dl/g)]

The intrinsic viscosity of the 1-butene/ethylene copolymer (A) is a value measured at 135°C in a decalin solvent using an Ubellohde's viscometer. About 20 mg of polymerized powder, and pellets or resin mass were taken, and dissolved in 15 mL of decalin, and the specific viscosity ηsp was measured in an oil bath heated to 135°C. 5 mL of a decalin solvent was added to this decalin solution for dilution, and then the specific viscosity ηsp was measured in the same manner. This dilution operation was repeated twice more, and the value of ηsp/C when the concentration (C) was extrapolated to 0 was determined as an intrinsic viscosity [η].

$$[\eta] = \lim\ (\eta sp/C)\ (C \rightarrow 0)$$

[Weight-average molecular weight (Mw) and molecular weight distribution (Mw/Mn)]

A gel permeation chromatograph Alliance GPC-2000 model manufactured by Waters Corporation was used as a GPC apparatus to measure Mw and Mn in terms of polystyrene under the following conditions, and Mw/Mn was calculated.

Separation column: Two columns of TSKgel GNH6-HT manufactured by Tosoh Corporation and two columns of TSKgel GNH6-HTL manufactured by Tosoh Corporation (each of the columns has a size of 7.5 mm in diameter and 300 mm in length).

Column temperature: 140°C
Mobile phase: o-Dichlorobenzene (manufactured by FUJIFILM Wako Pure Chemical Corporation) containing BHT (manufactured by Takeda Pharmaceutical Company Limited) at 0.025 wt% as an antioxidant
Movement rate: 1.0 mL/min
Sample concentration: 15 mg/10 mL
Sample injection volume: 400 μL
Detector: Differential refractometer
Standard polystyrene: A product manufactured by Tosoh Corporation was used when the molecular weight was Mw < 1000 and Mw > 4 × 106, and a product manufactured by Pressure Chemical Co. was used when the molecular

weight was 1000 ≤ Mw ≤ 4 × 106.

[Melting point and melting enthalpy]

The melting point and the melting enthalpy ΔHfus (1st, 2nd) were measured by the above-described measurement method.

In calorimetry of the 1-butene-based polymer composition with a differential scanning calorimeter (DSC), the melting point and the melting enthalpy measured in first temperature raising and derived from the 1-butene/ethylene copolymer (A) were defined as a "melting point (1st)_C4" and a "melting enthalpy (1st)_C4", respectively, the melting point and the melting enthalpy measured in second temperature raising and derived from the 1-butene/ethylene copolymer (A) were defined as a "melting point (2nd)_C4" and a "melting enthalpy (2nd)_C4", respectively, and the melting point and the melting enthalpy measured in second temperature raising and derived from the propylene-based polymer (B) were defined as a "melting point (2nd)_PP" and a "melting enthalpy (2nd)_PP", respectively.

<Crystallization temperature and crystallization enthalpy>

In calorimetry of the 1-butene-based polymer composition with a differential scanning calorimeter (DSC), the crystallization temperature and the crystallization enthalpy measured in first temperature lowering and derived from the propylene-based polymer (B) were defined as a "crystallization temperature_PP" and a "crystallization enthalpy_PP", respectively.

[Press molding conditions]

Press sheets prepared under the following conditions and stored at room temperature for 10 days or more for Production Examples 1 to 4, production Examples 7 and 8 and Comparative Example 1 and at room temperature for 15 days or more for Production Examples 5 and 6 (hereinafter, test pieces for mechanical properties) were used for tests.

Pressing machine: manufactured by KANSAI ROLL Co., Ltd. (model: PEWE-70/50 35)
Remaining heat time: 4 min
Remaining heat and pressurization temperature: 120°C
Pressure: 10 MPa
Pressurization time: 3 min
Cooling rate: 40°C/min (Pressurization at 10 MPa for 4 minutes with another pressing machine set at 20°C, followed by cooling to room temperature)

[Half-crystallization time (sec)]

The half-crystallization time of the 1-butene/ethylene copolymer (A) was measured by a differential scanning calorimeter (DSC) in a DSC 8500 apparatus manufactured by PerkinElmer Co., Ltd. The test piece was annealed at a temperature of 200°C for 10 minutes, and the temperature was lowered to a predetermined temperature (30°C) at a temperature lowering rate of 500°C/min to measure the half-crystallization time.

[Mechanical properties (normal temperature)]

The yield stress, the strength at break (TS), the elongation at break (chuck-to-chuck, EL) and the Young's modulus (YM) for the test piece for mechanical properties were measured in accordance with JIS K 6251 (measurement temperature: 23°C, tension speed = 200 mm/min, maximum strain = 800%). The stress of a test piece that was not broken at strain = 800% was defined as TS.

[Shore A hardness (momentary value) and Shore D hardness]

Using a hydraulic heat press molding machine set at 190°C, the 1-butene/ethylene copolymer (A) and the 1-butene-based polymer composition (X) were heated for 4 minutes, then molded under pressurization at 10 MPa for 3 minutes, and then cooled under pressurization at 20°C and 10 MPa for 4 minutes to produce a 2 mm-thick sheet (test piece).

After the molding, the sheets were stored at room temperature for 10 days or more for Production Examples 1 to 4, Production Examples 7 and 8 and Comparative Example 1 and at room temperature for 15 days or more for

Production Examples 5 and 6, followed by measurement of Shore A and Shore D.

With an A-type instrument, an indentation needle was brought into contact with the test piece, and immediately thereafter, a scale was read, and taken as a Shore A hardness (in accordance with ASTM D2240).

With a D-type instrument, an indentation needle was brought into contact with the test piece, and immediately thereafter, a scale of the maximum value was read, and taken as a Shore D hardness (in accordance with ASTM D2240).

In press molding, a 100 um-thick release PET film (manufactured by Toray Industries, Inc., trade name: Lumirror) was used as a release film.

[Haze (transparency)]

In accordance with JIS K 7136, the haze of a 2 mm-thick sheet obtained by press molding was measured with a digital turbidimeter "NDH-20D" manufactured by NIPPON DENSHOKU INDUSTRIES Co., Ltd.

[Example 1]

Using the 1-butene/ethylene copolymer (A-1) obtained in Production Example 1, press molding was performed by the above-described method, and the physical properties of the obtained molded article were measured by the above-described methods.

Table 2 shows the results.

[Examples 2 to 15 and Comparative Example 1]

Using Labo Plastomill [manufactured by Toyo Seiki Seisaku-sho, Ltd.], the polymers were kneaded for 5 minutes under the conditions of 200°C and 40 rpm in ratios (mass%) shown in Table 2, thereby obtaining 1-butene-based polymer compositions. The obtained compositions were subjected to press molding by the above-described method, and the physical properties of the obtained molded articles were measured by the above-described methods.

Table 2 shows the results.

[Table 2]

Table 2

| | | Example 1 | Example 2 | Example 3 | Example 4 | Example 5 | Example 6 | Example 7 | Example 8 |
|---|---|---|---|---|---|---|---|---|---|
| | | A-1 | X-1 | X-2 | X-3 | X-4 | X-5 | X-6 | X-7 |
| A-1 | mass% | 100 | 90 | 85 | 80 | | | | |
| A-3 | mass% | | | | | 90 | 80 | 75 | |
| A-4 | mass% | | | | | | | | 90 |
| A-6 | mass% | | | | | | | | |
| A-7 | mass% | | | | | | | | |
| A'-10 | mass% | | | | | | | | |
| B-1 | mass% | | 10 | | 20 | 10 | 20 | | 10 |
| B-2 | mass% | | | 15 | | | | 25 | |
| Melting point (1st)_C4 | °C | 62 | 63 | 63 | 63 | 46 | - | 45 | 44 |
| Melting enthalpy (1st)_C4 | J/g | 39 | 35 | 29 | 28 | 25 | - | 15 | 20 |
| Melting point (2nd) C4 | °C | n.a. | 63 | 64 | 63 | 43 | - | 34 | 34 |
| Melting enthalpy (2nd) C4 | J/g | n.a. | 26 | 23 | 20 | 8 | - | 4 | 2 |
| Melting point (2nd)_PP | °C | - | 136 | 161 | 137 | 136 | - | 161 | 136 |
| Melting enthalpy (2nd)_PP | J/g | - | 8 | 17 | 14 | 9 | - | 26 | 11 |
| Crystallization temperature_PP | °C | n.a. | 56 | 89 | 66 | 57 | - | 97 | 57 |
| Crystallization enthalpy_PP | J/g | n.a. | -10 | -17 | -17 | -8 | - | -27 | -8 |
| Yield stress | MPa | 6.0 | 7.5 | 8.2 | 8.5 | 4.0 | 5.0 | 6.0 | 3.0 |
| Strength at break | MPa | 33 | 36 | 30 | 35 | 23 | 27 | 26 | 19 |
| Elongation at break | % | 550 | 605 | 445 | 570 | 725 | 860 | 740 | 780 |
| Young's modulus | MPa | 180 | 215 | 270 | 270 | 95 | 145 | 175 | 60 |
| Shore A | - | 96 | 97 | 97 | 97 | 92 | | 96 | 86 |
| Shore D | - | 42 | 45 | 50 | 49 | 34 | 40 | 46 | 27 |
| Haze | % | 86 | 3 | 21 | 10 | 5 | 16 | 26 | 6 |

(continued)

| | | Example 9 | Example 10 | Example 11 | Example 12 | Example 13 | Example 14 | Example 15 | Comparat ive Example 1 |
|---|---|---|---|---|---|---|---|---|---|
| | | X-8 | X-9 | X-10 | X-11 | X-12 | X-13 | X-14 | X'-15 |
| A-1 | mass % | | | | | | | | |
| A-3 | mass % | | | | | | | | |
| A-4 | mass % | 80 | 75 | 70 | 80 | | | | |
| A-6 | mass % | | | | | 80 | | | |
| A-7 | mass % | | | | | | 80 | 75 | |
| A'-10 | mass % | | | | | | | | 90 |
| B-1 | mass % | 20 | | 30 | | | 20 | | 10 |
| B-2 | mass % | | 25 | | 20 | 20 | | 25 | |
| Melting point (1st)_C4 | °C | 47 | - | 42 | 43 | 45 | 46 | 45 | 97 |
| Melting enthalpy (1st)_C4 | J/g | 20 | - | 14 | 17 | 8 | 17 | 11 | 42 |
| Melting point (2nd) C4 | °C | 36 | - | 33 | 33 | n.a. | 30 | n.a. | 83 |
| Melting enthalpy (2nd)_C4 | J/g | 3.8 | - | 2.4 | 4 | n.a. | 2 | n.a. | 26 |
| Melting point (2nd) PP | °C | 136 | - | 137 | 162 | 162 | 137 | 162 | 137 |
| Melting enthalpy (2nd) PP | J/g | 16 | - | 28 | 26 | 22 | 19 | 22 | 8 |
| Crystallization temperature_PP | °C | 60 | - | 72 | 99 | 92 | 47 | 94 | 68 |
| Crystallization enthalpy_PP | J/g | -14 | - | -27 | -23 | -23 | -17 | -22 | -4 |
| Yield stress | MPa | 3.7 | 5.1 | 5.0 | 4.3 | - | 3.4 | 4.4 | 7.0 |
| Strength at break | MPa | 23 | 21 | 22 | 17 | 10 | 25 | 26 | 15 |
| Elongation at break | % | 875 | 630 | 735 | 795 | 900 | 845 | 855 | 485 |
| Young's modulus | MPa | 80 | 135 | 135 | 115 | 25 | 70 | 90 | 130 |
| Shore A | - | 87 | 95 | 95 | | 77 | 87 | 93 | |
| Shore D | - | 34 | 42 | 40 | 37 | 25 | 34 | 42 | 36 |
| Haze | % | 13 | 41 | 30 | 37 | 20 | 13 | 33 | 31 |

The components used in Examples 16 and 17 and Comparative Example 2 are shown below.

[Tackifier]

Alicyclic saturated hydrocarbon resin: trade name: ARKON P-115 manufactured by Arakawa Chemical Industries, Ltd.

[Base polymer (Z)]

Base polymer (Z1): trade name: RT2730 manufactured by REXtac LLC. (melting viscosity at 190°C: 4,000 mPa·s)

[Antioxidant]

Phenol-based antioxidant: trade name: Irganox 1010 manufactured by Ciba Specialty Chemicals Corporation
The hotmelt adhesive compositions used in Examples 16 and 17 and Comparative Example 2 were evaluated by the following methods.

[Method for producing test piece]

The hotmelt adhesive composition was put in a tank and melted at 180°C for 10 minutes using Hotmelt Glue Gun (TR-60LCD) manufactured by REKA Klebetechnik GmbH & Co. KG.

[Adhesive strength]

The obtained hotmelt adhesive composition was applied in a bead form to a 400 um-thick polypropylene sheet, and the sheets are combined with each other at room temperature after the elapse of a predetermined time (1 min/10 min), and a load of 400 g was applied for 1 day to bond the polypropylene sheets to each other. Thereafter, the combined sheet was cut into a 15 mm-wide strip to produce a test piece. This test piece was subjected to a T-shape peeling test at a measurement temperature of 23°C to measure adhesive strength.

(Tension speed: 50 mm/min)

[Bonding area]

The area of a portion where the adhesive and the polypropylene sheet are in close contact with each other in the test piece was defined as a bonding area.

[Open time]

For the test piece whose adhesive strength was measured, the open time was evaluated by the retention ratios of the bonding area and the adhesive strength. The retention ratio was calculated on the basis of equation (1) from the bonding areas and adhesive strengths of test pieces combined 1 minute and 10 minutes, respectively, after the application.
a: bonding area (adhesive strength) of test piece combined 1 minute after application
b: bonding area (adhesive strength) of test piece combined 10 minutes after application

$$\text{(Equation 1): retention ratio} = b/a \times 100\ [\%]$$

[B-type viscosity (180°C)]

The B-type viscosity at 180°C was measured using a B-type viscometer (DVII+PRO RV) manufactured by Brookfield Company.

[Softening temperature (ring and ball method)]

The hotmelt adhesive composition was melted with an iron plate heated to 230°C, and was then subjected to cold pressing for 5 minutes to prepare a circular disc-shaped press sheet.
The softening temperature thereof was measured by a ring and ball method using a softening temperature measuring apparatus (ASP-MG model).

[Examples 16 and 17 and Comparative Example 2]

In a separable flask having a volume of 500 mL, APAO-1, an antioxidant, a 1-butene-based polymer composition (Examples 3 and 8) and a tackifier were introduced in this order into the system in ratios shown in Table 3 while it was confirmed that each resin was fully melted, and the inside of the system was stirred with an anchor-shaped stirring vane in a nitrogen atmosphere under the conditions of heating temperature: 200°C, kneading time: 40 minutes (kneading was started at the time of introducing APAO into the system) and stirring rate in the system: 10 to 200 rpm to obtain a hotmelt adhesive.
The obtained hotmelt adhesive composition was evaluated by the above-described methods.
Table 3 shows the results.

[Table 3]

Table 3

| | | Example 16 | Example 17 | Comparative Example 2 |
|---|---|---|---|---|
| APAO-1 | phr | 55 | 55 | 70 |
| X-2 | phr | 15 | | |
| X-7 | phr | | 15 | |
| Tackifier | phr | 30 | 30 | 30 |
| Antioxidant | phr | 0.5 | 0.5 | 0.5 |
| Adhesive strength | N | 130 | 95 | 60 |
| Fracture mode* | | CF | CF | CF |
| Retention ratio of bonding area | % | 90 | 84 | 85 |
| Retention ratio of adhesive strength | % | 95 | 95 | 80 |
| Softening temperature | °C | 131 | 132 | 101 |
| B-type viscosity (180°C) | cps | 9,900 | 14,000 | 2,400 |
| *Fracture mode CF Cohesive fracture (fractured in adhesive)<br>AF Interfacial peeling (fractured at interface between adhesive and PP base material) | | | | |

Press molding was performed by the above-described method, and the physical properties of the obtained molded articles were measured by the above-described methods.
Table 2 shows the results.

[Examples 18 to 27 and Comparative Examples 3 and 4]

Using Labo Plastomill [manufactured by Toyo Seiki Seisaku-sho, Ltd.], the polymers shown in Table 4 were kneaded for 5 minutes under the conditions of 200°C and 40 rpm in ratios (mass%) shown in Table 4, thereby obtaining 1-butene-based polymer compositions. The obtained compositions were subjected to press molding by the above-described method, and the physical properties of the obtained molded articles were measured by the above-described methods.

<Test for resistance to whitening>

Using a hydraulic heat press molding machine set at 190°C, the obtained composition was heated for 5 minutes, then molded under pressurization at 10 MPa for 2 minutes, and then cooled under pressurization at 20°C and 10 MPa for 4 minutes to produce a 500 um-thick sheet. From the sheet, a dumbbell No. 2 specified in JIS K 6251 was produced, the color phase before extension (L value (before extension)) and the color phase of the dumbbell extended by 15 mm at a tension speed of 50 mm/min (L value (after extension)) were measured using a spectrophotometric colorimeter (CM-3700d manufactured by KONICA MINOLTA, INC.), and a color phase change (ΔL) was calculated on the basis of the following equation. A color phase change (ΔL) was similarly calculated using the obtained sheet heat-treated at 85°C for 5 days. The smaller the ΔL value, the better the resistance to whitening. Table 4 shows the results.

$$\Delta L = \text{L value (after extension)} - \text{L value (before extension)}$$

[Table 4]

Table 4

| | | Example 18 | Example 19 | Example 20 | Example 21 | Example 22 | Example 23 |
|---|---|---|---|---|---|---|---|
| A-1 | mass% | 10 | 20 | | | | |
| A-4 | mass% | | | 10 | 20 | 20 | 40 |
| A-7 | mass% | | | | | | |
| PER-1 | mass% | | | | | | |
| B-1 | mass% | 90 | 80 | 90 | 80 | | 60 |
| B-2 | mass% | | | | | 80 | |
| Melting point (1st)_C4 | °C | n.a. | n.a. | n.a. | n.a. | n.a. | 48.3 |
| Melting enthalpy (1st)_ C4 | J/g | n.a. | n.a. | n.a. | n.a. | n.a. | 6.5 |
| Melting point (2nd)_C4 | °C | n.a. | n.a | n.a. | n.a. | n.a. | n.a. |
| Melting enthalpy (2nd)_ C4 | J/g | n.a. | n.a. | n.a. | n.a. | n.a. | n.a. |
| Melting point (2nd)_PP | °C | 139 | 140 | 140 | 138 | 167 | 136 |
| Melting enthalpy (2nd)_ PP | J/g | 63 | 60 | 67 | 72 | 72 | 48 |
| Crystallization temperature_pp | °C | 90 | 91 | 89 | 88 | 109 | 84 |
| Crystallization enthalpy_pp | J/g | -74 | -62 | -78 | -68 | -75 | -44 |
| Yield stress | MPa | 24.2 | 20.0 | 22.4 | 17.9 | 23.6 | 9.9 |

(continued)

| | | Example 18 | Example 19 | Example 20 | Example 21 | Example 22 | Example 23 |
|---|---|---|---|---|---|---|---|
| Strength at break | MPa | 33 | 36 | 37 | 33 | 31 | 26 |
| Elongation at break | % | 505 | 590 | 575 | 585 | 485 | 960 |
| Young's modulus | MPa | 975 | 775 | 820 | 630 | 855 | 295 |
| Shore D | - | 70.8 | 68.2 | 69 | 66 | 69 | 57 |
| Haze | % | 84 | 78 | 81 | 74 | 86 | 56 |
| ΔL | - | 12.8 | 9.0 | 7.4 | 4.8 | 28.7 | - |
| | | Example 24 | Example 25 | Example 26 | Example 27 | Comparative Example 3 | Comparative Example 4 |
| A-1 | mass% | | | | | | |
| A-4 | mass% | 40 | 60 | | | | |
| A-7 | mass% | | | 10 | 20 | | |
| PER-1 | mass% | | | | | 10 | 20 |
| B-1 | mass% | | 40 | 90 | 80 | 90 | 80 |
| B-2 | mass% | 60 | | | | | |
| Melting point (1st)_C4 | °C | 44 | 49 | n.a. | n.a. | n.a. | n.a. |
| Melting enthalpy (1st)_C4 | J/g | 4 | 11 | n.a. | n.a. | n.a. | n.a. |
| Melting point (2nd)_C4 | °C | n.a. | n.a. | n.a. | n.a. | n.a. | n.a. |
| Melting enthalpy (2nd)_C4 | J/g | n.a. | n.a. | n.a. | n.a. | n.a. | n.a. |
| Melting point (2nd)_PP | °C | 165 | 138 | 139 | 137 | 136 | 139 |
| Melting enthalpy (2nd)_PP | J/g | 61 | 31 | 56 | 59 | 63 | 77 |
| Crystallization temperature_pp | °C | 105 | 79 | 90 | 88 | 90 | 88 |
| Crystallization enthalpy_pp | J/g | -63 | -30 | -58 | -58 | -62 | -58 |
| Yield stress | MPa | 13.3 | 5.8 | 22.5 | 17.1 | 25.5 | 23.0 |
| Strength at break | MPa | 27 | 21 | 39 | 34 | 40 | 36 |
| Elongation at break | % | 590 | 855 | 565 | 570 | 560 | 545 |

(continued)

| | | Example 24 | Example 25 | Example 26 | Example 27 | Comparative Example 3 | Comparative Example 4 |
|---|---|---|---|---|---|---|---|
| Young's modulus | MPa | 385 | 155 | 855 | 570 | 1030 | 875 |
| Shore D | - | 61 | 47 | 69 | 64 | 70 | 69 |
| Haze | % | 69 | 44 | 78 | 71 | 83 | 82 |
| ΔL | - | 1.6 | - | 8.4 | 5.2 | 16.7 | 12.9 |

[Examples 28 to 35]

In the same manner as in Example 18 except that raw materials were used in ratios (parts by weight) shown in Table 5, 1-butene-based polymer compositions were obtained by performing kneading under the conditions of 200°C and 40 rpm for 5 minutes using Labo Plastomill manufactured by Toyo Seiki Seisaku-sho, Ltd.

The obtained compositions were subjected to press molding by the above-described method, and the physical properties of the obtained molded articles were measured by the above-described methods and in the same manner as in Example 18.

Tables 5-1 and 5-2 show the results.

[Comparative Examples 5 and 6]

In the same manner as in Example 18 except that raw materials were used in ratios (parts by weight) shown in Table 5, propylene-based polymer compositions were obtained by performing kneading under the conditions of 200°C and 40 rpm for 5 minutes using Labo Plastomill manufactured by Toyo Seiki Seisaku-sho, Ltd.

The obtained compositions were subjected to press molding by the above-described method, and the physical properties of the obtained molded articles were measured by the above-described methods and in the same manner as in Example 18.

Tables 5-1 and 5-2 show the results.

<Melting point and melting enthalpy>

The melting point Tm (2nd) and the melting enthalpy ΔHfus (2nd) were measured by the above-described measurement method.

The strongest melting peak in a temperature range from 70°C to 170°C among melting peaks measured in second temperature raising was defined as a melting point Tm (2nd), and the area of melting peaks in the temperature range was defined as a melting enthalpy ΔH (2nd).

<Crystallization temperature and crystallization enthalpy>

A crystallization temperature Tc and a crystallization enthalpy ΔHc were measured by the above-described measurement method. The strongest crystallization peak in a temperature range from 50°C to 100°C among crystallization peaks measured in first temperature lowering in calorimetry of the 1-butene-based polymer composition with a differential scanning calorimeter (DSC) was defined as a crystallization temperature Tc, and the area of melting peaks in the temperature range was defined as a crystallization enthalpy ΔHc.

<Yield elongation>

The yield elongation of the test piece for mechanical properties was measured in accordance with JIS K 6251 (measurement temperature: 23°C, tension speed = 50 mm/min).

[Table 5-1]

Table 5-1

| | | Example 28 | Example 29 | Example 30 | Example 31 | Example 32 | Comparative Example 5 |
|---|---|---|---|---|---|---|---|
| A-4 | mass% | 10 | 10 | 20 | 20 | | |
| A-7 | mass% | | | | | 10 | |
| PER-1 | mass% | | | | | | 10 |
| B-1 | mass% | 85 | 80 | 75 | 70 | 85 | 85 |
| C1-1 | mass% | 5 | 10 | 5 | 10 | 5 | 5 |
| Melting point (2nd) | °C | 139 | 137 | 138 | 136 | 138 | 136 |
| Melting enthalpy (2nd) | J/g | 82 | 62 | 68 | 55 | 63 | 63 |
| Crystallization temperature | °C | 88 | 89 | 86 | 87 | 89 | 89 |
| Crystallization enthalpy | J/g | -75 | -62 | -62 | -56 | -61 | -63 |
| Yield stress | MPa | 21.5 | 19.6 | 16.8 | 15.3 | 21.5 | 24.2 |
| Yield elongation | % | 13 | 13 | 15 | 16 | 13 | 11 |
| Strength at break | MPa | 37 | 34 | 34 | 31 | 39 | 39 |
| Elongation at break | % | 595 | 585 | 624 | 630 | 580 | 585 |
| Young's modulus | MPa | 815 | 725 | 600 | 540 | 785 | 915 |
| Shore D | - | 68 | 67 | 65 | 63 | 68 | 69 |
| Haze | % | 90 | 95 | 89 | 96 | 88 | 87 |
| ΔL | - | 6.7 | 8.1 | 5.3 | 4.4 | 11.1 | 11.0 |

[Table 5-2]

Table 5-2

| | | Example 33 | Example 34 | Example 35 | Comparative Example 6 |
|---|---|---|---|---|---|
| A-4 | mass% | 20 | 30 | | |
| A-7 | mass% | | | 20 | |
| PER-1 | mass% | | | | 20 |
| B-1 | mass% | 65 | 55 | 65 | 65 |
| C2-1 | mass% | 15 | 15 | 15 | 15 |
| Melting point (2nd) | °C | 136 | 136 | 138 | 135 |
| Melting enthalpy (2nd) | J/g | 48 | 45 | 45 | 46 |
| Crystallization temperature | °C | 87 | 84 | 87 | 86 |
| Crystallization enthalpy | J/g | -48 | -42 | -47 | -51 |
| Yield stress | MPa | 13.0 | 9.9 | 12.6 | 16.4 |
| Yield elongation | % | 17 | 19 | 18 | 13 |
| Strength at break | MPa | 30 | 25 | 30 | 33 |

(continued)

| | | Example 33 | Example 34 | Example 35 | Comparative Example 6 |
|---|---|---|---|---|---|
| Elongation at break | % | 640 | 690 | 615 | 605 |
| Young's modulus | MPa | 425 | 310 | 415 | 560 |
| Shore D | - | 60 | 55 | 58 | 63 |
| Haze | % | 95 | 89 | 94 | 96 |
| ΔL | - | 7.1 | 3.3 | 8.0 | 11.5 |

[Examples 36 to 38 and Comparative Examples 7 and 8]

The 1-butene-based polymer compositions (X-2) and (X-14) obtained in Examples 3 and 15 were used. Using an extruder (φ40 mm), the raw materials shown in Table 6 were kneaded in ratios shown in Table 6 (part by mass), and using a cast film molding machine, the obtained pellets were extruded at 230°C to produce a 100 um-thick single-layered unstretched film. For the obtained single-layered unstretched film, evaluation was performed as described below.

Table 6 shows the results.

<Heat sealing (HS) strength (before heat treatment)>

A 50 um-thick Teflon (registered trademark) sheet, two single-layered unstretched films obtained, and a 50 um-thick Teflon (registered tradename) sheet were stacked in this order to produce a test material.

The heat sealing bars of a heating seal tester (manufactured by TESTER SANGYO CO,. LTD., TB-701B model) were adjusted to 15 mm in width and 300 mm in length, the temperature of the lower sealing bar was set to 70°C, the temperature of the upper sealing bar was set to 190°C, and the test material was held between the sealing bars, and heat-sealed at a pressure of 0.2 MPa for 1.0 second. Thereafter, the two Teflon sheets were removed to obtain a laminated film, and the laminated film was left to stand at 23°C for 1 day. The laminated film is slit to a width of 15 mm so as to include a heat-sealed portion, and non-heat-sealed portions were chucked in a tensile tester (manufactured by INTESCO co., ltd., IM-20ST). The maximum load was measured when the heat-sealed portion was peeled in a 180° direction at a rate of 300 mm/min. The measurement was performed five times, and the average value of maximum loads was defined as heat sealing strength.

[Table 6]

Table 6

| | | Example 36 | Example 37 | Example 38 | Comparative Example 7 | Comparative Example 8 |
|---|---|---|---|---|---|---|
| X-2 | mass% | 20 | | | | |
| X-13 | mass% | | 10 | 20 | | |
| PER-2 | mass% | | | | 25 | 40 |
| B-1 | mass% | 80 | 90 | 80 | 75 | 60 |
| Yield stress | MPa | 12.8 | 12.8 | 10.8 | 1.6 | 11.0 |
| Strength at break | MPa | 41 | 41 | 40 | 38 | 36 |
| Elongation at break | % | 660 | 680 | 670 | 640 | 675 |
| Young's modulus | MPa | 500 | 615 | 430 | 470 | 340 |
| HS strength | N/15 mm | 45.5 | 45.3 | 43.4 | 38.1 | 37.4 |

## Claims

1. A 1-butene/ethylene copolymer (A) satisfying the following requirements (A1) to (A5):

   (A1) a content of constituent units (i) derived from 1-butene is in a range of 70 to 99.9 mol%, and a content of constituent units (ii) derived from ethylene is in a range of 0.1 to 30 mol%, provided that a total of constituent units (i) and constituent units (ii) is 100 mol%;
   (A2) an isotactic pentad fraction (mmmm) calculated by $^{13}$C-NMR is in a range of 80 to 99.9%;
   (A3) an intrinsic viscosity [η] measured in decalin at 135°C is in a range of 0.7 to 2.0 dl/g;
   (A4) a melt flow rate (MFR) measured at 190°C and a load of 2.16 kg in accordance with ASTM D1238 is 1 to 100 g/10 min; and
   (A5) when, using a differential scanning calorimeter (DSC), the temperature is raised from -70°C to 200°C at a heating rate of 20°C/min (first temperature raising), maintained at 200°C for 10 minutes, then lowered to -70°C at a cooling rate of 20°C/min (first temperature lowering), maintained at -70°C for 1 minute, and then raised again from -70°C to 200°C at a heating rate of 20°C/min (second temperature raising), a melting peak is not observed during the second temperature raising.

2. The 1-butene/ethylene copolymer (A) according to claim 1, satisfying one or more of the following requirements (A6) to (A8):

   (A6) a weight-average molecular weight (Mw) is 100,000 to 400,000;
   (A7) a Shore A hardness measured in accordance with ASTM D2240 is in a range of 81 to 99; and
   (A8) a Shore D hardness measured in accordance with ASTM D2240 is in a range of 31 to 60.

3. A 1-butene-based polymer composition comprising a 1-butene/ethylene copolymer (A) satisfying the following requirements (A1) to (A5) and a propylene-based polymer (B) satisfying the following requirements (B1) and (B2):

   (A1) a content of constituent units (i) derived from 1-butene is in a range of 70 to 99.9 mol%, and a content of constituent units (ii) derived from ethylene is in a range of 0.1 to 30 mol%, provided that a total of constituent units (i) and constituent units (ii) is 100 mol%;
   (A2) an isotactic pentad fraction (mmmm) calculated by $^{13}$C-NMR is in a range of 80 to 99.9%;
   (A3) an intrinsic viscosity [η] measured in decalin at 135°C is in a range of 0.7 to 2.0 dl/g;
   (A4) a melt flow rate (MFR) measured at 190°C and a load of 2.16 kg in accordance with ASTM D1238 is 1 to 100 g/10 min; and
   (A5) when, using a differential scanning calorimeter (DSC), the temperature is raised from -70°C to 200°C at a heating rate of 20°C/min (first temperature raising), maintained at 200°C for 10 minutes, then lowered to -70°C at a cooling rate of 20°C/min (first temperature lowering), maintained at -70°C for 1 minute, and then raised again from -70°C to 200°C at a heating rate of 20°C/min (second temperature raising), a melting peak is not observed during the second temperature raising, and
   (B1) a melting point measured by a differential scanning calorimeter is in a range of 100 to 170°C; and
   (B2) an isotactic pentad fraction is in a range of 90 to 99.9%.

4. A 1-butene-based polymer composition comprising a 1-butene/ethylene copolymer (A) and a propylene-based polymer (B), and satisfying the following requirement (X4):
   (X4) a Shore D hardness measured in accordance with ASTM D2240 is in a range of 20 to 80.

5. The 1-butene-based polymer composition according to claim 4, wherein the Shore D hardness measured in accordance with ASTM D2240 is in a range of 20 to 43.

6. The 1-butene-based polymer composition according to claim 4, wherein the Shore D hardness measured in accordance with ASTM D2240 is in a range of 44 to 80.

7. The 1-butene-based polymer composition according to any one of claims 3 to 6, satisfying the following requirement (X2) :
   (X2) when, using a differential scanning calorimeter (DSC), the temperature is raised from -70°C to 200°C at a heating rate of 20°C/min (first temperature raising), maintained at 200°C for 10 minutes, then lowered to -70°C at a cooling rate of 20°C/min (second temperature lowering), maintained at - 70°C for 1 minute, and then raised again from -70°C to 200°C at a heating rate of 20°C/min (second temperature raising), a first peak (melting peak) generated

in the second temperature raising is 20°C or higher and lower than 100°C, and a second peak (melting peak) generated in the second temperature raising is in a range of 100°C to 170°C.

**8.** The 1-butene-based polymer composition according to any one of claims 3 to 7, satisfying the following requirement (X1-1):
(X1-1) the content of the 1-butene/ethylene copolymer (A) is in a range of 63 to 99 mass%, and the content of the propylene-based polymer (B) is in a range of 1 to 37 mass%, provided that a total of the 1-butene/ethylene copolymer (A) and the propylene-based polymer (B) is 100 mass%.

**9.** The 1-butene-based polymer composition according to any one of claims 3 to 6, satisfying the following requirement (X1-2):
(X1-2) the content of the 1-butene/ethylene copolymer (A) is in a range of 62 to 1 mass%, and the content of the propylene-based polymer (B) is in a range of 38 to 99 mass%, provided that a total of the 1-butene/ethylene copolymer (A) and the propylene-based polymer (B) is 100 mass%.

**10.** The 1-butene-based polymer composition according to any one of claims 3, 4 or 6, comprising an ethylene-based polymer (C) .

**11.** The 1-butene-based polymer composition according to claim 10, wherein the ethylene-based polymer (C) comprises one or more selected from the group consisting of a highpressure low-density polyethylene (C1) and an ethylene/α-olefin copolymer (C2).

**12.** The 1-butene-based polymer composition according to claim 10 or 11, satisfying the following requirement (X1-3):

(X1-3) a content of the 1-butene/ethylene copolymer (A) is 1 to 50 mass%;
a content of the propylene-based polymer (B) is 30 to 98 mass%; and
a content of the content of the ethylene-based polymer (C) is 1 to 20 mass%,
provided that a total of the 1-butene/ethylene copolymer (A), the propylene-based polymer (B) and the ethylene-based polymer (C) is 100 mass%.

**13.** The 1-butene-based polymer composition according to any one of claims 3 to 12, wherein the 1-butene-based polymer composition has a melting enthalpy ΔHfus derived from the propylene-based polymer (B) measured during second temperature raising with a differential scanning calorimeter (DSC) of 5 to 100 J/g.

**14.** The 1-butene-based polymer composition according to any one of claims 3 to 13, wherein the 1-butene-based polymer composition has a haze of 50% or less as measured in accordance with JIS K 7136.

**15.** The 1-butene-based polymer composition according to any one of claims 3 to 14, wherein the 1-butene-based polymer composition has a Shore D hardness measured in accordance with ASTM D2240 in a range of 40 to 80.

**16.** A pellet comprising the 1-butene/ethylene copolymer (A) according to claim 1 or 2, or a pellet comprising the 1-butene-based resin composition according to any one of claims 3 to 15.

**17.** A hotmelt adhesive, comprising the 1-butene/ethylene copolymer (A) according to claim 1 or 2, or the 1-butene-based resin composition according to any one of claims 3 to 15.

**18.** An automobile part selected from an interior part and an exterior part, the automobile part comprising the hotmelt adhesive according to claim 17.

**19.** A film, comprising the 1-butene/ethylene copolymer (A) according to claim 1 or 2, or the 1-butene-based resin composition according to any one of claims 3 to 15.

**20.** A nonwoven fabric, comprising the 1-butene/ethylene copolymer (A) according to claim 1 or 2, or the 1-butene-based resin composition according to any one of claims 3 to 15.

## INTERNATIONAL SEARCH REPORT

International application No.
**PCT/JP2022/009197**

**A. CLASSIFICATION OF SUBJECT MATTER**

***C08F 210/08***(2006.01)i; ***C08L 23/10***(2006.01)i; ***C08L 23/20***(2006.01)i; ***C09J 123/10***(2006.01)i; ***C09J 123/20***(2006.01)i
FI: C08F210/08; C08L23/20; C08L23/10; C09J123/20; C09J123/10

According to International Patent Classification (IPC) or to both national classification and IPC

**B. FIELDS SEARCHED**

Minimum documentation searched (classification system followed by classification symbols)

C08F210/08; C08L23/10; C08L23/20; C09J123/10; C09J123/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2014-500340 A (BASELL POLIOLEFINE ITALIA S.R.L.) 09 January 2014 (2014-01-09) claims, paragraph [0063], examples | 1-2, 16-17, 19 |
| X | US 2015/0051350 A1 (BASELL POLIOLEFINE ITALIA S.R.L.) 19 February 2015 (2015-02-19) claims, paragraphs [0019]-[0021], [0044], examples | 1-3, 7-8, 13-16, 19 |
| X | JP 2018-522784 A (BASELL POLIOLEFINE ITALIA S.R.L.) 16 August 2018 (2018-08-16) claims, examples | 4-5, 7, 9, 13, 16, 19 |
| A | US 2012/0171405 A1 (BASELL POLIOLEFINE ITALIA S.R.L.) 05 July 2012 (2012-07-05) claims, examples | 1-20 |
| A | WO 2017/213216 A1 (MITSUI CHEMICALS INC) 14 December 2017 (2017-12-14) claims, examples | 1-20 |
| A | WO 1998/033850 A1 (TOSOH CORPORATION) 06 August 1998 (1998-08-06) claims, examples | 1-20 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 May 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/009197**

**C. DOCUMENTS CONSIDERED TO BE RELEVANT**

| Category* | Citation of document, with indication, where appropriate, of the relevant passages | Relevant to claim No. |
|---|---|---|
| A | US 2004/0229064 A1 (DEMEUSE, Mark) 18 November 2004 (2004-11-18) claims, examples | 1-20 |

Form PCT/ISA/210 (second sheet) (January 2015)

**INTERNATIONAL SEARCH REPORT**

International application No.
**PCT/JP2022/009197**

**Box No. III Observations where unity of invention is lacking (Continuation of item 3 of first sheet)**

This International Searching Authority found multiple inventions in this international application, as follows:

The invention in claim 1 and the invention in claim 4 do not have the same or corresponding technical features. Therefore, both inventions cannot be considered to be a group of related inventions forming a single general inventive concept referred to in PCT rule 13.1, and thus do not satisfy unity of invention.

Meanwhile, the invention in claim 1 and the invention in claim 3 have the same or corresponding technical features.

Therefore, the claims include the following two inventions.

(Invention 1) Invention in claims 1 and 3, and claims 2 and 7-20 referring to said claims
(Invention 2) Invention in claim 4 and claims 5-20 referring to said claim

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2022/009197**

| Patent document cited in search report | Publication date (day/month/year) | Patent family member(s) | Publication date (day/month/year) |
|---|---|---|---|
| JP 2014-500340 A | 09 January 2014 | US 2013/0202836 A1<br>claims, paragraph [0127], examples<br>WO 2012/052429 A1<br>EP 2630211 A1<br>KR 10-2013-0129188 A<br>CN 103154176 A | |
| US 2015/0051350 A1 | 19 February 2015 | WO 2013/124185 A1<br>EP 2631271 A1<br>CN 104105754 A | |
| JP 2018-522784 A | 16 August 2018 | US 2018/0346621 A1<br>claims, examples<br>WO 2016/188982 A1<br>EP 3302918 A1<br>KR 10-2018-0002854 A<br>CN 107636064 A | |
| US 2012/0171405 A1 | 05 July 2012 | WO 2011/036077 A1<br>EP 2480597 A1<br>CN 102666680 A | |
| WO 2017/213216 A1 | 14 December 2017 | US 2019/0264014 A1<br>claims, examples<br>EP 3470461 A1<br>CN 109196039 A<br>KR 10-2019-0005933 A | |
| WO 1998/033850 A1 | 06 August 1998 | AU 5679098 A<br>claims, examples | |
| US 2004/0229064 A1 | 18 November 2004 | WO 2004/104073 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03070788 A
- JP 2017504667W B
- JP 2004 A
- JP 51676 A